(19) Europäisches Patentamt
European Patent Office
Office européen des brevets

(11) Veröffentlichungsnummer: **0 167 107 B1**

(12) # EUROPÄISCHE PATENTSCHRIFT

(45) Veröffentlichungstag der Patentschrift: **08.05.91**

(51) Int. Cl.$^5$: **C09B 67/54**, C09B 67/26, D06P 1/38

(21) Anmeldenummer: **85107942.6**

(22) Anmeldetag: **26.06.85**

(54) **Verfahren zur Herstellung salzarmer, flüssiger, wässriger Zubereitungen von faserreaktiven Farbstoffen.**

(30) Priorität: **04.07.84 DE 3424506**

(43) Veröffentlichungstag der Anmeldung:
**08.01.86 Patentblatt 86/02**

(45) Bekanntmachung des Hinweises auf die Patenterteilung:
**08.05.91 Patentblatt 91/19**

(84) Benannte Vertragsstaaten:
**CH DE FR GB IT LI**

(56) Entgegenhaltungen:
**EP-A- 0 029 960**
**EP-A- 0 059 782**
**DE-A- 3 148 878**
**FR-A- 2 267 351**
**JP-A-73 055 923**
**EP-A- 0 041 240**
**EP-A- 0 186 836**
**DE-A- 3 544 549**
**FR-A- 2 416 926**

(73) Patentinhaber: **HOECHST AKTIENGESELLSCHAFT**
**Postfach 80 03 20**
**W-6230 Frankfurt am Main 80(DE)**

(72) Erfinder: **Meininger, Fritz, Dr.**
**Loreleistrasse 7**
**W-6230 Frankfurt am Main 80(DE)**
Erfinder: **Opitz, Konrad, Dr.**
**Schwedenstrasse 22**
**W-6237 Liederbach(DE)**
Erfinder: **Semel, Joachim, Dr.**
**Sodener Strasse 20**
**W-6233 Kelkheim (Taunus)(DE)**

**EP 0 167 107 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Zum Färben und Bedrucken von stickstoffhaltigen Fasermaterialien, wie Wolle, Seide oder synthetischen Polyamidfasern, und vor allem von Fasermaterialien aus natürlicher oder regenerierter Cellulose werden in großem Umfang Reaktivfarbstoffe verwendet, die in Form trockener und nicht färbende Stellmittel enthaltender Pulver eingesetzt werden. Außer durch die unangenehme, auf der Pulverform beruhenden Staubentwicklung wird das Ansetzen von Druckpasten sowie von Klotz- und Färbeflotten mit solchen Farbstoffpulvern vor allem dadurch erschwert, daß viele der Farbstoffpulver wegen des Gehalts an mineralölhaltigen Entstaubungsmitteln, das auch zu öligen Abscheidungen führen kann, schlecht benetzen und so zur Klumpenbildung neigen oder zu wenig löslich sind.

Diese Nachteile von Farbstoffpulvern machen sich bei denjenigen Färbeverfahren besonders unangenehm bemerkbar, bei denen es darauf ankommt, hohe Farbstoffkonzentrationen bei niedrigen Temperaturen zu erreichen, so zum Beispiel beim Klotz-Kurzverweil-Verfahren. Hier sind flüssige Färbepräparationen erwünscht und den pulverförmigen deutlich überlegen. Flüssigeinstellungen mit Farbstoffgehalten, die von praktischem Interesse sind, können mit Wasser als Lösemittel aber nur von relativ gut löslichen Reaktivfarbstoffen hergestellt werden, insbesondere dann, wenn sie noch den gesamten synthesebedingten Gehalt an Fremdelektrolyten, insbesondere Alkalichloride und/oder Alkalisulfate enthalten. Derartige wäßrige Flüssigeinstellungen von Reaktivfarbstoffen sind beispielsweise aus den US-Patentschriften Nrs. 4 072 463, 4 149 850 und 4 078 884 bekannt.

Bei Reaktivfarbstoffen mit geringer Wasserlöslichkeit kann dieser Fremdelektrolytgehalt zur Folge haben, daß Färbepräparationen mit Farbstoffgehalten, die von praktischem Interesse sind und die über 10 Gew.-%, besser über 15 Gew.-% liegen sollen, nicht herstellbar sind. Dies ist sehr häufig dann der Fall, wenn der Reaktivfarbstoff durch Aussalzen mit Natrium- und/oder Kaliumchlorid isoliert werden muß. Man hat deshalb bereits beispielsweise gemäß der britischen Patentschrift Nr. 1 359 898, der britischen Patentanmeldungsveröffentlichung Nr. 2 015 018 und den deutschen Offenlegungsschriften Nrs. 2 948 292 und 3 148 878 sowie den europäischen Patentanmeldungs-Veröffentlichungen Nrs. 0 041 240 A und 0 059 782 A versucht, flüssige Präparationen, u.a. auch von Reaktivfarbstoffen, durch Membrantrennverfahren, bevorzugt durch Reversosmose oder Ultrafiltration, von störenden Elektrolytanteilen zu befreien. Diese Verfahren sind jedoch mit mehreren schwerwiegenden Nachteilen verbunden. An erster Stelle sind die zwangsläufig erforderlichen hohen Drucke von über 3 bis 100 bar zu nennen, die zur Überwindung des osmotischen Drucks der zu entsalzenden Lösung benötigt werden. Außer der Energie zur Erzeugung und Aufrechterhaltung dieser Drucke, z.B. durch Pumpen, müssen entsprechend aufwendig gebaute Apparaturen eingesetzt werden, die diesen hohen Drucken standhalten. Will man mit diesen Verfahren eine möglichst weitgehende Entsalzung erreichen, muß der Vorgang nach Zusatz von destilliertem oder anderweitig entsalztem Wasser unter Umständen mehrfach wiederholt werden, wobei entsprechend große Mengen Abwasser anfallen, das selbst bei Verwendung einer Membran, die ein Rückhaltevermögen für den Farbstoff von 99,5 % aufweist, noch deutlich gefärbt ist. Auch bei kontinuierlicher Prozeßführung sind diese Nachteile nicht zu vermeiden.

Diese Nachteile entfallen mit dem erfindungsgemäßen Verfahren. Dieses betrifft ein Verfahren zur Entfernung von Alkali- oder Erdalkalihalogeniden, insbesondere -chloriden, aus wäßrigen Lösungen faserreaktiver Farbstoffe der nachstehend definierten allgemeinen Formel (1) durch Elektrodialyse, indem man die elektrolytsalz-haltige wäßrige Lösung des faserreaktiven Farbstoffes zwischen zwei Elektroden und Anionen- und Kationentauschermembranen einer Gleichspannung aussetzt.

Das Prinzip der Entsalzung von wäßrigen Salzlösungen durch Elektrodialyse und entsprechende Elektrodialyseapparaturen sind bekannt (vgl. hierzu Dechema-Monographien, Band 75, S. 23-25 sowie 30 u. 31, ebenso Chemie-Ing.-Techn. 47, S. 923 u. 924 (1975)). Diese Verfahrensweisen werden erfindungsgemaß zur Herstellung salzarmer, flüssiger, wäßriger Zubereitungen von faserreaktiven Farbstoffen eingesetzt.

Die den beiden Elektroden angelegte Gleichspannung bewirkt die Wanderung der in der Lösung befindlichen Anionen und Kationen, insbesondere der Chloridionen und deren korrespondierenden Alkali- und Erdalkaliionen, und bei entsprechender Anordnung den Durchtritt der Kationen durch die Kationentauschermembran bzw. der Anionen durch die Anionentauschermembran, d.h. die Entsalzung der Lösung. Die für den Elektrolyttransport durch die Membranen erforderliche Gleichspannung richtet sich nach Art und Konzentration des Elektrolyten und des Farbstoffes in der zu entsalzenden Lösung. Hiervon beeinflußt wird auch die Größe des sich durch die angelegte Spannung ergebenden Stromflusses und die damit aufzuwendende Energie. Begrenzt wird die anzulegende Spannung durch diejenige Grenzstromdichte, bei deren Überschreitung Elektrolysevorgänge auch innerhalb der Farbstofflösung ablaufen. Diese kann zuvor in Vorversuchen experimentell ermittelt werden. In der Regel liegt die Grenzstromdichte bei Farbstoffkonzentrationen von 10 bis 30 Gew.-% und bei Elektrolytkonzentrationen von 1 bis 10 Gew.-% oberhalb von 300

A/m$^2$.

Das erfindungsgemäße Verfahren wird in der Regel so ausgeführt, daß man parallel zueinander zwischen zwei Elektroden alternierend Anionen- und Kationentauschermembranen anordnet, die durch zwischengelegte Distanzrahmen und Memranen gebildeten Kanäle gegeneinander abdichtet und eine gegebenenfalls bis auf 70° C erwärmte, elektrolythaltige Farbstofflösung (im nachfolgenden auch als Diluat bezeichnet) - gegebenenfalls im Kreislauf - durch diejenigen Kanäle führt, die in Richtung der Anode durch eine Anionentauschermembran begrenzt werden, und - gegebenenfalls im Kreislauf - eine wäßrige, elektrolythaltige Lösung (im nachfolgenden auch als Konzentrat bezeichnet), deren Anfangsleitfähigkeit vorzugsweise zwischen 1 mS/cm und 10 mS/cm liegt, zur Aufnahme des abzutrennenden Elektrolyten durch diejenigen Kanäle führt, die in Richtung der Anode durch eine Kationentauschermembran begrenzt werden. Solche wäßrigen, elektrolythaltigen Lösungen können wäßrige Lösungen des Natriumsulfats oder des Natriumchlorids oder Kaliumchlorids selbst sein, die eine Konzentration von etwa 0,05 bis 0,8 Gew.-% besitzen. Von den Diluat- und Konzentratkanälen durch die jeweils letzte Membran - vorzugsweise eine Kationentauschermembran - getrennt, befindet sich der mit einer elektrolythaltigen Lösung beschickte Kathoden- bzw. Anodenraum. Die Elektroden werden vorteilhaft während des Elektrodialyseprozesses mit dieser elektrolythaltigen Lösung bespült, um störende Gasentwicklungen oder Umsetzungen zu vermeiden, der man insbesondere Aktivkohle zusetzt, um die Gasentwicklung möglichst zu unterdrücken. Als solche Elektrodenspüllösungen verwendet man in der Regel natriumsulfathaltige Lösungen mit einem $Na_2SO_4$-Gehalt von etwa 1 bis 4 Gew.-%.

Als Ionenaustauschermembranen werden für Anionen und Kationen selektive Membranen mit einer Permselektivität von größer als 0,9 und mit einem elektrischen Widerstand von kleiner als 5 Ω/cm$^2$, die Porengrößen von bevorzugt bis zu 2 nm aufweisen, verwendet (vgl. hierzu auch die Zeitschrift Desalination, Band 34, S. 75-95 (1980)). Sie besitzen nur eine geringe Wasserdurchlässigkeit, und der Durchtritt von Wasser wird lediglich durch den Transport von Solvatationswasser der Ionen bewirkt. Solche Ionentauschermembranen bestehen im allgemeinen aus einer Trägerfolie oder einem Trägergewebe aus Polyester, Polyäthylen oder Polyvinylchlorid, auf die fertige Austauscherharze aufgebracht werden oder auf denen das Austauscherharz erst in üblicher Weise polymerisiert und anschließend nach den üblichen Methoden weiterbehandelt wird, um Kationen- bzw. Anionenaustauscher zu erhalten (vgl. hierzu Ullmanns Encyklopädie der technischen Chemie, 4. Aufl. (1977), Band 13, S. 279 ff., insbesondere S. 282 + 283 und 296 + 297). Insbesondere sind hochselektive stark saure Kationentauscher vom $Na^+$-Typ bzw. stark basische Anionentauscher vom $Cl^-$-Typ auf Basis vernetzter Copolymerprodukte des Styrols und Butadiens, die durch Sulfo- und/oder Carboxygruppen bzw. quartäre Ammoniumgruppen (etwa der allgemeinen Formel $-NA_3^{(+)}$, worin A niederes Alkyl, wie Methyl oder Äthyl, ß-Hydroxyäthyl oder Wasserstoff ist), modifiziert sind, auf einem Polyvinylchlorid-Stützgewebe zu nennen, so beispielsweise die als $^{(R)}$Selemion-Ionentauschermembranen der Typen CMV bzw. AMV bezeichneten Ionentauschermembranen der Fa. Asahi Glass Co. Ltd., Japan. Solche erfindungsgemäß verwendbaren Ionentauschermembranen sind beispielsweise in den japanischen Patentschriften Nrs. 281 179, 282 383, 291 567, 410 583 und 532 825 und in den obigen genannten Zeischriften (Desalination, loc. cit., und der darin zitierten Literatur; Ullmann, loc. cit.) beschrieben.

Das erfindungsgemäße Verfahren kann insbesondere kontinuierlich in mehreren hintereinander geschalteten Membranstapeln oder auch diskontinuierlich durch Kreislaufführung der Flüssigkeitsströme mit Puffergefäßen oder durch Mischformen dieser Verfahrensarten ausgeführt werden. Insbesondere eignen sich Anlagen, bei denen der Membranstapel auch mit Stromumkehr betrieben werden kann, so daß auf den Membranen abgeschiedene Verunreinigungen nach Umpolung wieder abtransportiert werden.

Da der osmotische Druck der Farbstofflösung beim erfindungsgemäßen Verfahren keine Rolle spielt, kann das erfindungsgemäße Verfahren unter Normaldruck durchgeführt werden. Aus diesem Grunde können gegebenenfalls bei höheren Temperaturen erhältliche nahezu gesättigte Farbstofflösungen elektrodialytisch entsalzt werden, für die das Druck-Permeationsverfahren wegen gegebenenfalls zu hoher osmotischer Drucke oder leistungshemmender Deckschichtbildung nicht eingesetzt werden kann. Die Abwassermenge ist beim erfindungsgemäßen Verfahren gering, da als Abwasser nur das die ausgeschiedenen Elektrolyte enthaltende Wasser anfällt, dessen Menge von gleicher Größenordnung ist wie die zur Entsalzung eingesetzte Farbstofflösung. Diese begrenzte Abwassermenge ist zudem nahezu farblos, da die Elektrodialysemembranen die Farbstoffe zu weniger als 0,1 % passieren lassen. Es treten somit praktisch auch keine Farbstoffverluste auf, obwohl die eingesetzten faserreaktiven Farbstoffe ionisch vorliegen.

Faserreaktive Farbstoffe, deren wäßrige Lösungen von Alkali- und/oder Erdalkalihalogeniden, wie insbesondere von Natriumchlorid und Kaliumchlorid oder auch Calciumchlorid, mittels des erfindungsgemäßen Elektrodialyse-Verfahrens befreit oder im wesentlichen befreit werden sollen, sind Farbstoffe, der allgemeinen Formel (1)

$$(MO_3S)_m - F - Z_n \qquad (1)$$

in welcher

- F den Rest eines Farbstoffchromophors eines Anthrachinon-, eines Formazan-, eines Dioxazin-, eines Mono-, Dis- oder Trisazofarbstoffes oder eines Phthalocyaninfarbstoffes darstellt, wobei sowohl die Phthalocyaninfarbstoffe als auch die Formazan-, Dioxazin- oder Azofarbstoffe als Metallkomplexe mit Cu, Cr, Co, Ni oder Fe als komplexbildendes Zentralatom vorliegen können,
- m eine ganze Zahl von 1 bis 8 ist,
- n eine ganze Zahl von 1 bis 3 bedeutet,
- Z für eine faserreaktive Gruppe der Monohalogen-symm.-triazinyl-,Mono-, Di- oder Trihalogen-pyrimidin-, Mono- oder Dichlor-chinoxalin- oder Dichlorphthalazin-, Dichlorchinazolin- oder Dichlorpyridazon-Reihe oder deren Brom- oder Fluorderivate, der sulfonylgruppenhaltigen Triazinyl-, der sulfonylgruppenhaltigen Pyrimidin- oder ammoniumgruppenhaltigen Triazinyl-Reihe oder der Pyrimidin- oder ammoniumgruppenhaltigen Triazinyl-Reihe oder der aliphatischen Reihe steht, und
- M ein Wasserstoffatom, ein Alkalimetall, wie Natrium, Kalium oder Lithium, oder das Äquivalent eines Erdalkalimetalls wie des Calciums, bedeutet.

Der faserreaktive Rest ist insbesondere ein Rest der allgemeinen Formel (2a)

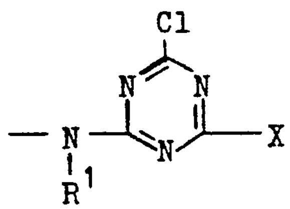

(2a)

in welchem $R^1$ und X die später angegebenen Bedeutungen haben, oder eine faserreaktive Gruppe der allgemeinen Formel (2b) oder (2c)

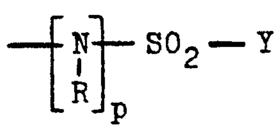

(2b)

$$— G — SO_2 — Y \qquad (2c)$$

in welchen

- G eine Methylen- oder Ethylengruppe bedeutet,
- R eine Alkylgruppe von 1 bis 4 C-Atomen, wie eine Ethylgruppe und insbesondere Methylgruppe, ist,
- p für die Zahl Null oder 1 steht und
- Y für die Vinylgruppe oder eine in ß-Stellung durch einen alkalisch eliminierbaren Rest substituierte Ethylgruppe steht (solche in ß-Stellung befindlichen, alkalisch eliminierbaren Reste sind beispielsweise ein Chloratom, eine Acetoxy-, 3-Sulfobenzoyloxy-, Sulfato-, Thiosulfato- oder Phosphatogruppe; bevorzugt ist Y die Vinylgruppe oder eine ß-Sulfatoethyl-, ß-Thiosulfatoethyl- oder ß-Acetoxyethyl-Gruppe).

In der obengenannten allgemeinen Formel (2a) bedeuten:

- $R^1$ ist ein Wasserstoffatom oder eine Alkylgruppe von 1 bis 4 C-Atomen, wie eine Methyl- oder Ethylgruppe;

X ist eine Gruppe der allgemeinen Formel (3a), (3b)

$-O-R'$ (3a)

$-S-R''$ (3b)

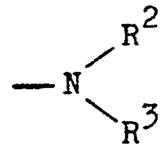
(3c)

in welchen

R' ein Wasserstoffatom oder eine Alkylgruppe von 1 bis 4 C-Atomen ist oder eine Alkylgruppe von 1 bis 4 C-Atomen bedeutet, die durch eine Alkoxygruppe von 1 bis 4 C-Atomen, eine Sulfo-, Carboxy-, Sulfato- oder Phosphatogruppe oder eine unsubstituierte oder eine durch 1 oder 2 Substituenten aus der Gruppe Methyl, Ethyl, Methoxy, Ethoxy, Chlor, Sulfo und Carboxy substituierte Phenylgruppe substituiert ist,

R" eine Alkylgruppe von 1 bis 4 C-Atomen ist oder eine Alkylgruppe von 1 bis 4 C-Atomen bedeutet, die durch eine Alkoxygruppe von 1 bis 4 C-Atomen, eine Sulfo-, Carboxy-, Sulfato- oder Phosphatogruppe oder eine unsubstituierte oder eine durch 1 oder 2 Substituenten aus der Gruppe Methyl, Ethyl, Methoxy, Ethoxy, Chlor, Sulfo und Carboxy substituierte Phenylgruppe substituiert ist,

$R^2$ ein Wasserstoffatom oder eine Alkylgruppe von 1 bis 4 C-Atomen ist, die durch einen oder zwei Substituenten aus der Gruppe Acetylamino, Hydroxy, Sulfato, ß-Sulfatoethylsulfonyl, ß-Thiosulfatoethylsulfonyl, Alkoxy von 1 bis 4 C-Atomen, Sulfo, Carboxy, Phenyl, Naphthyl, durch Sulfo, Carboxy, ß-Sulfatoethylsulfonyl, ß-Thiosulfatoethylsulfonyl, Methyl, Ethyl, Methoxy, Ethoxy, Chlor, Sulfamoyl und/oder Carbamoyl substituiertes Phenyl und durch Sulfo, Carboxy, ß-Sulfatoethylsulfonyl, ß-Thiosulfatoethylsulfonyl, Sulfamoyl und/oder Carbamoyl substituiertes Naphthyl substituiert sein kann, oder ein Cycloalkylrest von 5 bis 8 C-Atomen ist, der durch 1, 2 oder 3 Methylgruppen und/oder eine Amino- oder Alkylamino-Gruppe mit einem Alkylrest von 1 bis 4 C-Atomen substituiert sein kann, und

$R^3$ ein Wasserstoffatom oder eine Alkylgruppe von 1 bis 4 C-Atomen ist, die durch einen oder zwei Substituenten aus der Gruppe Acetylamino, Hydroxy, Sulfato, ß-Sulfatoethylsulfonyl, ß-Thiosulfatoethylsulfonyl, Alkoxy von 1 bis 4 C-Atomen, Sulfo, Carboxy, Phenyl, Naphthyl, durch Sulfo, Carboxy, ß-Sulfatoethylsulfonyl, ß-Thiosulfatoethylsulfonyl, Methyl, Ethyl, Methoxy, Ethoxy, Chlor, Sulfamoyl und/oder Carbamoyl substituiertes Phenyl und durch Sulfo, Carboxy, ß-Sulfatoethylsulfonyl ß-Thiosulfatoethylsulfonyl, Sulfamoyl und/oder Carbamoyl substituiertes Naphthyl substituiert sein kann, oder eine Phenyl- oder Naphthylgruppe ist oder eine Phenylgruppe bedeutet, die durch 1 oder 2 Substituenten aus der Gruppe Acetylamino, Benzoylamino, Nitro, ß-Sulfatoethylsulfonyl, ß-Thiosulfatoethylsulfonyl, ß-Chlorethylsulfonyl, Vinylsulfonyl, Alkoxy von 1 bis 4 C-Atomen, Sulfo, Carboxy, Sulfamoyl und Carbamoyl substituiert ist, oder eine Naphthylgruppe ist, die durch 1, 2 oder 3 Sulfogruppen oder durch 1 oder 2 Sulfogruppen und eine Vinylsulfonyl-, ß-Sulfatoethylsulfonyl-, ß-Thiosulfatoethylsulfonyl- oder ß-Chlorethylsulfonyl-Gruppe substituiert ist, wobei $R^2$ und $R^3$ zueinander gleiche oder voneinander verschiedene Bedeutungen besitzen können, oder worin

$R^2$ und $R^3$ zusammen mit dem Stickstoffatom den Rest eines aus einem, zwei oder drei Alkylenresten von 1 bis 5 C-Atomen und gegebenenfalls einem oder zwei Heteroatomen, wie einem Sauerstoff-, Stickstoff- oder Schwefelatom, bestehenden 5- bis 8-gliedrigen heterocyclischen Ring, wie beispielsweise einen Piperazino, Piperidino- oder Morpholinoring, bilden.

Die erfindungsgemäß zur elektrodialytischen Entsalzung eingesetzten Farbstofflösungen (Diluate) können einen oder mehrere dieser Farbstoffe enthalten. Die Farbstoffkonzentrationen liegen in der Regel zwischen 3 und 30 Gew.-%. Besonders vorteilhaft ist das erfindungsgemäße Verfahren zur Entsalzung von Farbstofflösungen solcher Farbstoffe, die durch Aussalzen mittels Alkalichloriden, wie Natrium- oder Kaliumchlorid, isoliert werden müssen. Bevorzugt werden insbesondere solche Farbstofflösungen eingesetzt, deren Farbstoffe eine faserreaktive Gruppe Z enthalten, die der aliphatischen Reihe angehört, wie insbesondere Farbstoffe mit einer faserreaktiven Gruppe Z der allgemeinen Formel (2d)

$$-W-SO_2-Y \qquad (2d)$$

in welcher W für eine Gruppe der Formel $-CH_2-$ oder $-CH_2-CH_2-$ steht oder den N-Methylamino- oder N-Ethylamino-Rest bedeutet oder bevorzugt eine direkte Bindung ist und Y die obengenannte Bedeutung hat.

Bevorzugt werden in das erfindungsgemäße Verfahren Lösungen mit solchen Farbstoffen, die einer der allgemeinen Formeln (1a), (1b), (1c), (1d), (1e), (1f), (1g), (1h) und (1j) entsprechen, eingesetzt:

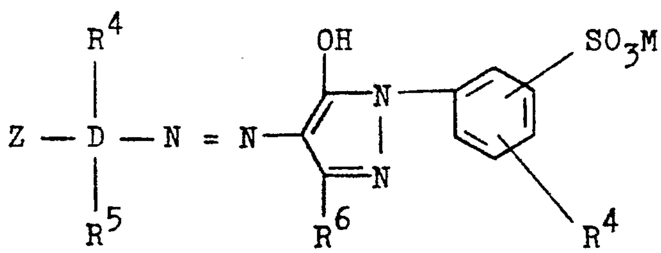

(1a)

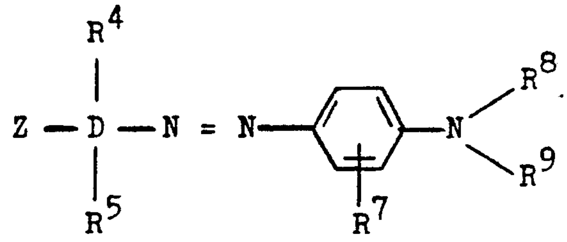

(1b)

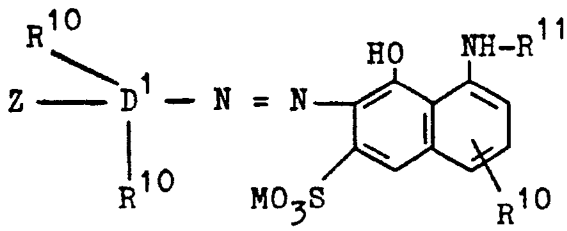

(1c)

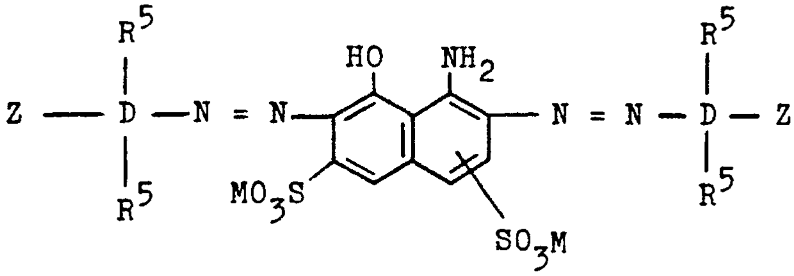

(1d)

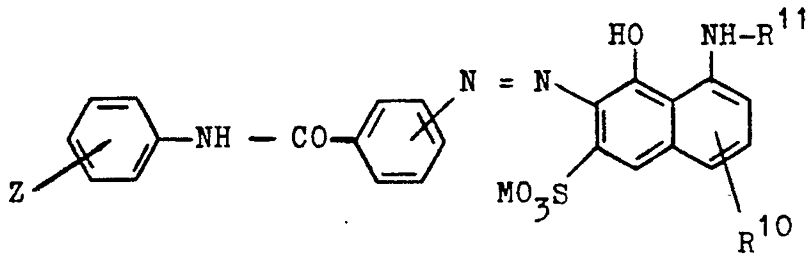

(1e)

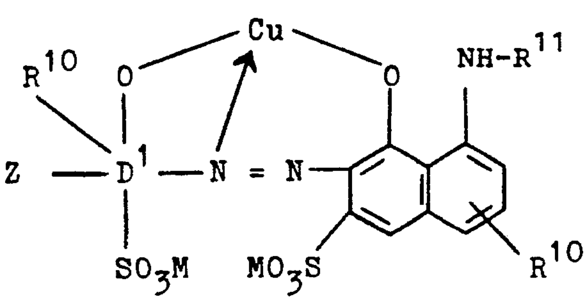

(1f)

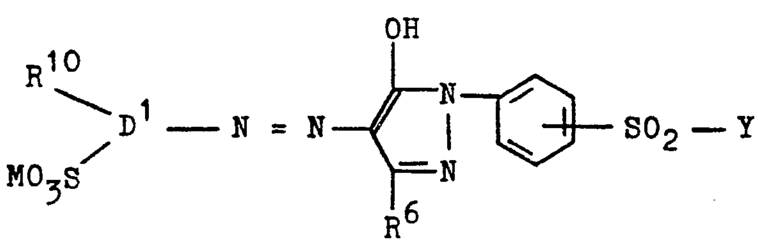

(1g)

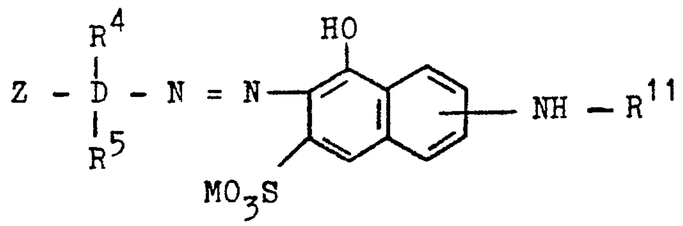

(1h)

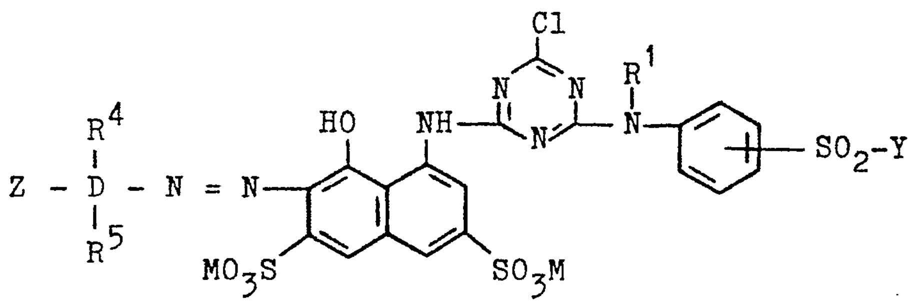

(1j)

in welchen bedeuten:

Z hat die obengenannte Bedeutung und ist insbesondere eine faserreaktive Gruppe der allgemeinen Formel (2b), in welcher p für die Zahl Null steht und Y eine der besonders genannten Bedeutungen besitzt, insbesondere bevorzugt die ß-Sulfatoethyl-Gruppe ist;

M hat die obengenannte Bedeutung;

D ist ein Benzolring;

$R^4$ ist ein Wasserstoffatom oder eine Alkylgruppe von 1 bis 4 C-Atomen, wie insbesondere die Methylgruppe, oder eine Alkoxygruppe von 1 bis 4 C-Atomen, wie die Ethoxygruppe und insbesondere die Methoxygruppe, ein Chloratom, eine Sulfogruppe (entsprechend der allgemeinen Formel $-SO_3M$ mit der M der obengenannten Bedeutung) oder eine Carboxygruppe (entsprechend der allgemeinen Formel -COOM mit M der obengenannten Bedeutung);

$R^5$ ist ein Wasserstoffatom oder eine Alkylgruppe von 1 bis 4 C-Atomen, wie insbesondere die Methylgruppe, oder eine Alkoxygruppe von 1 bis 4 C-Atomen;

$R^6$ ist eine Carbalkoxygruppe von 2 bis 5 C-Atomen, wie die Carbomethoxy- oder Carbethoxygruppe, oder bevorzugt eine Methyl- oder Carboxygruppe;

$R^7$ ist ein Chloratom, die Methylgruppe, die Acetylamino- oder die Ureidogruppe;

$R^8$ ist ein Wasserstoffatom oder eine Alkylgruppe von 1 bis 4 C-Atomen, bevorzugt hiervon die Ethylgruppe, die durch eine Sulfato-, Sulfo-, Carboxy-, Monosulfophenyl- oder Disulfophenyl-Gruppe substituiert sein kann;

$R^9$ ist eine Alkylgruppe von 1 bis 4 C-Atomen, hiervon bevorzugt die Ethylgruppe, die durch eine Sulfato-, Sulfo-, Carboxy-, Monosulfophenyl- oder Disulfophenyl-Gruppe substituiert ist;

$D^1$ ist ein Naphthalinring;

$R^{10}$ ist ein Wasserstoffatom oder eine Sulfogruppe;

$R^{11}$ ist eine Acetylgruppe oder eine Benzoylgruppe;

$R^{12}$ ist ein Wasserstoffatom, ein Chloratom, eine Methyl-, Methoxy- oder Ethoxygruppe;

desweiteren solche Farbstofflösungen mit einem Kupferformazan-Farbstoff entsprechend der allgemeinen Formel (1k)

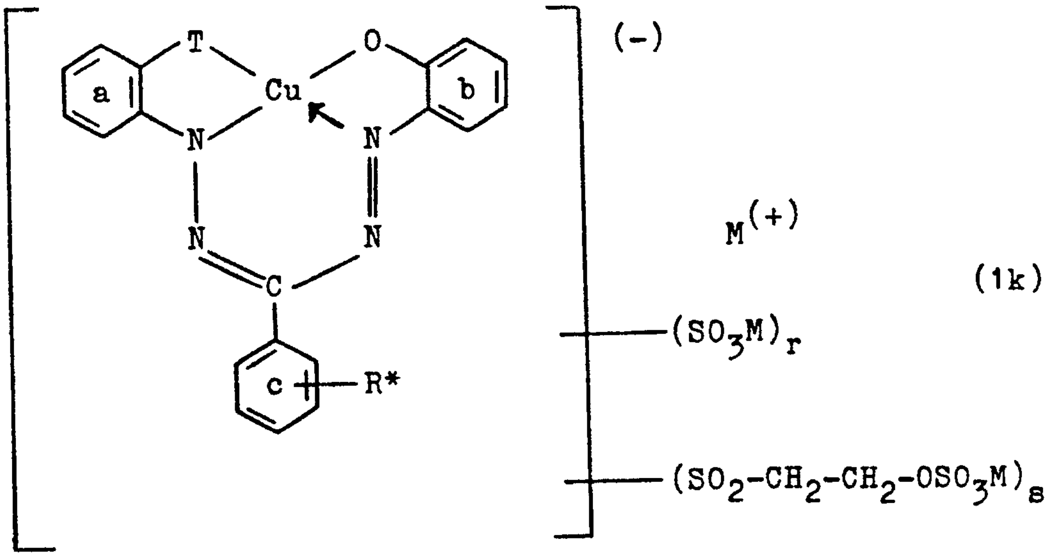

(1k)

in welcher

M die obengenannte Bedeutung besitzt,
r die Zahl 1, 2 oder 3 bedeutet,
s für die Zahl 1 oder 2 steht,
R* für Wasserstoff, Chlor, Methyl, Ethyl, Methoxy, Ethoxy oder Carboxy steht,
T die Gruppe -O- oder -COO- bedeutet und die Sulfogruppe(n) an die Benzolkerne a, b und/oder c und die ß-Sulfatoethylsulfonyl-Gruppe(n) an die Benzolkerne a und/oder b gebunden sind.

Insbesondere bevorzugt werden solche Farbstofflösungen eingesetzt, die einen in den Beispielen genannten Farbstoff der Formel (A), (B), (F), (J), (K) oder (L) enthalten.

Die im erfindungsgemäßen Verfahren entstehenden Sekundärmembranen besitzen zwar eine gute Durchlässigkeit für Alkali- und Erdalkalimetallionen und für Halogenidionen, jedoch infolge der großen Hydrathülle der Sulfationen eine schlechte Durchlässigkeit für Sulfationen. Es empfiehlt sich deshalb, bei der Synthese von Farbstoffen, aus deren Lösungen erfindungsgemäß Halogenide entfernt werden sollen, die Verwendung von Schwefelsäure und deren Salze oder die Bildung von Sulfaten zu vermeiden. Wo dies nicht möglich ist, ist es vorteilhaft, die Farbstofflösung vor der Elektrodialyse von Sulfationen zu befreien, indem man Chloride solcher Metalle zusetzt, die schwer lösliche Sulfate bilden, wie beispielsweise Calciumchlorid, und das ausgefallene Sulfat abtrennt.

Die erfindungsgemäß zur Elektrodialyse eingesetzten Farbstofflösungen können bereits Puffersubstanzen enthalten, die einen pH-Wert zwischen 3 und 7 einzustellen und zu halten vermögen. Solche Puffersubstanzen sind beispielsweise Natrium- und Kaliumacetat, Natrium- und Kaliumoxalat sowie die verschiedenen primären, sekundären und tertiären Natrium- und Kaliumsalze der Phosphorsäure oder deren Mischungen, weiterhin Natriumborat. Bevorzugt sind Natriumborat und das primäre und sekundäre Natriumphosphat.

Zur Herstellung der erfindungsgemäß eingesetzten Farbstofflösungen kann man von trockenen, wie z.B. sprühgetrockneten, salzhaltigen Farbstoffpulvern ausgehen, die in Wasser gelöst werden. Vorteilhaft setzt man jedoch die anfallenden Syntheselösungen der faserreaktiven Farbstoffe, ggf. nach vorheriger Entfernung von Sulfationen, direkt in die Elektrodialyse ein, nachdem man ihnen gegebenenfalls - zwecks Erhöhung der Farbstoffkonzentration - einen Teil des Wassers durch Abdestillieren unter vermindertem Druck entzogen hat oder ihnen aber - zum gleichen Zwecke - eine weitere Menge des Farbstoffproduktes, das aus der Syntheselösung durch Ausfällen und Filtration oder Sprühtrocknen isoliert und in einer geringen Menge Wasser gelöst worden war, zugesetzt hat.

Bei dem erfindungsgemäßen Verfahren werden Entsalzungsgrade an Halogeniden von weit über 90% erreicht. Die hierbei erfindungsgemäß erhältlichen flüssigen Farbstofflösungen der faserreaktiven Farbstoffe sind infolge ihrer Salzarmut besonders lagerstabil und führen weder nach mehrwöchiger Lagerung bei erhöhter Temperatur noch nach mehrmonatiger Lagerung bei Raumtemperatur oder nach mehrtägiger Lagerung bei Temperaturen bis zu -10 °C zu irgend- einer Farbstoffausfällung. Außerdem bleibt die Faserreaktivität der Farbstoffe, insbesondere bei nachträglichem Zusatz von Puffersubstanzen, unbeeinträchtigt, so daß bei diesen konzentrierten Farbstofflösungen keine Farbstärkeverluste auftreten.

Mit dem erfindungsgemäßen Verfahren gelingt es deshalb, halogenidarme oder praktisch halogenidfreie

Farbstofflösungen von faserreaktiven Farbstoffen der obengenannten und definierten allgemeinen Formel (1) herzustellen, die, gegebenenfalls nach nachträglicher Aufkonzentration durch destillative Entfernung von Wasser, 5 bis 60 Gew.-%, vorzugsweise 15 bis 50 Gew.-% eines oder mehrerer solcher Farbstoffe enthalten und einen Halogenidgehalt von 0 bis 1,0 Gew.-%, vorzugsweise zwischen 0,001 und 0,5 Gew.-%, besitzen. Diese mehr oder weniger konzentrierten Farbstofflösungen können, wie bereits oben erwähnt, auch zusätzlich Puffersubstanzen enthalten, die einen pH-Wert zwischen 3 und 7 einzustellen und zu halten vermögen. Der Anteil an gegebenenfalls nachträglich zugesetzten Puffersubstanzen in den Farbstofflösungen kann zwischen 0,1 und 6 Gew.-%, vorzugsweise zwischen 1 und 4 Gew.-% sein. Der pH-Wert der Lösungen liegt in der Regel zwischen 3 und 7, vorzugsweise zwischen 4,0 und 5,5.

Solche halogenidarmen und gegebenenfalls sulfatarmen, gegebenenfalls aufkonzentrierten und gepufferten Farbstofflösungen eignen sich vorteilhaft als technisch wertvolle Färbepräparationen zum Färben und Bedrucken von natürlichen und synthetischen Polyamidfasermaterialien, wie Wolle und Seide, oder von Fasermaterialien aus natürlicher oder regenerierter Cellulose, wie Baumwolle, Leinen, Zellwolle und Viskoseseide, sowie von Fasergemischen, die eine oder mehrere der genannten Faserarten enthalten. Insbesondere sind diese Färbepräparationen geeignet zur Bereitung von Klotz- und Färbeflotten sowie von Druckpasten. Die nachstehenden Beispiele dienen zur Erläuterung der Erfindung. Die angegebenen Teile sind Gewichtsteile, die Prozentangaben stellen Gewichtsprozente dar, sofern nicht anders vermerkt. Volumenteile stehen zu Gewichtsteilen im Verhältnis von Liter zu Kilogramm.

Beispiel 1

600 Teile eines Farbstoffpulvers, das 12,9 % Kaliumchlorid und 4,1 % Natriumchlorid (entsprechend 8,94 % Chloridionen) und 83 % des Farbstoffes der Formel (A)

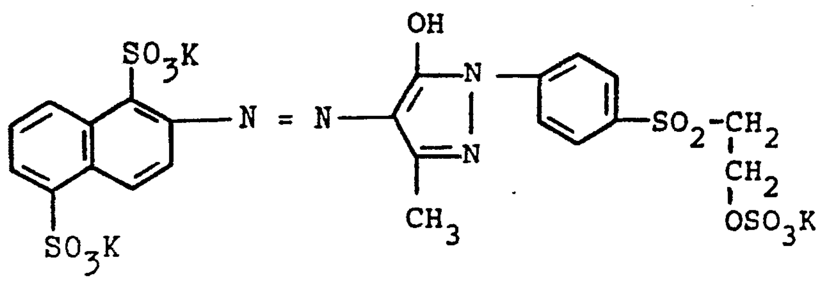

(A)

enthielt, wurden in 2400 Teilen Wasser gelöst und in einer Elektrodialyseapparatur mit einem maximalen Arbeitsvolumen von 3000 Volumenteilen und einer Membranfläche von 814 $cm^2$ unter einer Gleichspannung von 28 Volt elektrodialysiert. Als Anionentauschermembran wurde eine Membran mit vernetztem Styrol-Butadien-Copolymer als Matrix und quartären Ammoniumgruppen als Ankergruppen auf Polyvinylchlorid-Stützgewebe verwendet, die einen Gehalt an Austauschergruppen von 1,9 Äquivalenten/kg, einen Wassergehalt von 19 %, einen Widerstand von 2 bis 4,5 $\Omega/cm^2$ und eine Permselektivität von 0,92 aufwies. Als Kationentauschermembran wurde eine Membran mit vernetztem Styrol-Butadien-Copolymer als Matrix und Sulfonsäuregruppen als Ankergruppen auf Polyvinylchlorid-Stützgewebe verwendet, die einen Gehalt an Austauschergruppen von 2,4 Äquivalenten/kg, einen Wassergehalt von 25 %, einen Widerstand von 2,9 $\Omega/cm^2$ und eine Permselektivität von 0,95 aufwies. Die Porengrößen beider Membranen waren im Bereich von 0,5 bis 1,5 nm. Als Konzentratvorlage diente eine 0,25 %ige wäßrige Natriumchloridlösung von gleicher Menge. Die Elektrodialyse wurde so lange durchgeführt, bis sich die anfangs rasch abfallende elektrische Leitfähigkeit der Farbstofflösung auch über 1 bis 2 Stunden nicht mehr änderte; die Gesamtelektrodialysezeit betrug 16 Stunden.

Nach Ende der Elektrodialyse wurden 2400 Teile einer Farbstofflösung erhalten, die 0,059 % Chloridionen enthielt, was einem Entsalzungsgrad von 96,7 % entspricht. Der Farbstoffgehalt der Endlösung von etwa 18,8 % war gegenüber der Ausgangslösung praktisch unverändert.

Zur Herstellung einer vorteilhaft anwendbaren Färbepräparation kann die aus der Elektrodialyse erhaltene Farbstofflösung mit 20 Teilen Natriumdihydrogenphosphat versetzt und unter vermindertem Druck von 1090 Teilen Wasser befreit werden. Man erhält dann 1570 Teile einer flüssigen Färbepräparation des obengenannten Farbstoffes, die einen pH-Wert von 4,6 und einen Farbstoffgehalt von 31,75 % aufweist. Diese flüssige Färbepräparation ist im geschlossenen Gefäß mindestens 3 Monate bei 20° C, 2 Wochen bei

0 °C oder 6 Wochen bei 50 °C lagerstabil.
Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, gelbe Färbungen und Drucke ergaben, die genauso farbstark waren wie diejenigen, die unter entsprechender Verwendung gleichkonzentrierter Färbebäder, Klotzflotten oder Druckpasten mit 1 Teil einer 61,5 % des obigen Farbstoffes der Formel (A) enthaltenden Pulvereinstellung hergestellt wurden.

Beispiel 2

3000 Teile einer wäßrigen Lösung des Farbstoffes der Formel (B)

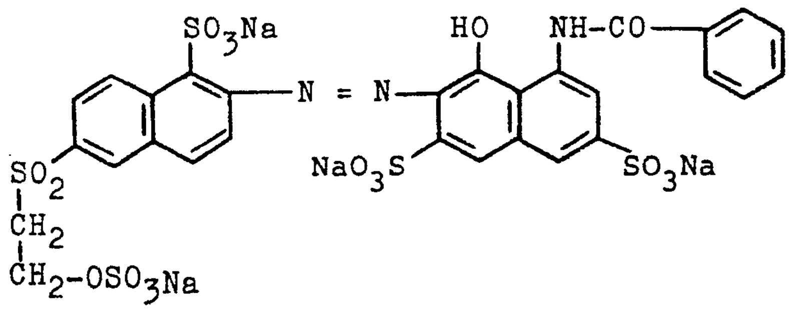

(B)

die 16,2 % dieses Farbstoffes und 2,0 % Chloridionen enthielten, wurden gemäß der Verfahrensweise des Beispieles 1 innerhalb von 17 Stunden elektrodialysiert. Es wurden 2716 Teile einer Farbstofflösung erhalten, die nunmehr 17,95 %ig an dem Farbstoff der Formel (B) war und einen Chloridionengehalt von 0,037 % besaß. Der Entsalzungsgrad war somit über 99 %.

Die erfindungsgemäß erhältliche Endlösung kann zu einer vorteilhaften Färbepräparation weiterverarbeitet werden, wenn man sie beispielsweise mit 25 Teilen Natriumdihydrogenphosphat versetzt und unter vermindertem Druck 1007 Teile Wasser abdestilliert. Es werden 1734 Teile einer Farbstofflösung erhalten, die einen pH-Wert von 4,5 aufweist und 28 %ig an den Farbstoff der Formel (B) ist. Sie ist im geschlossenen Gefäß mindestens 3 Monate bei 20 °C, 2 Wochen bei 0 °C oder 6 Wochen bei 50 °C lagerstabil.
Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, rote Färbungen und Drucke ergaben, die genauso farbstark waren wie diejenigen, die unter entsprechender Verwendung gleichkonzentrierter Färbebäder, Klotzflotten oder Druckpasten mit 1 Teil einer 56 % dieses Farbstoffes (B) enthaltenden Pulvereinstellung hergestellt werden.

Beispiel 3

600 Teile eines Farbstoffpulvers, das 21,8 % Chloridionen und 64 % des Farbstoffes der Formel (C)

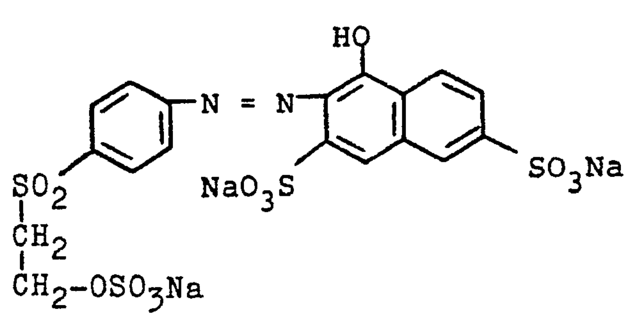

(C)

enthielt, wurden in 2400 Teilen Wasser gelöst und gemäß der Verfahrensweise des Beispieles 1 15

Stunden elektrodialysiert. Die Endlösung besaß nur noch einen Chloridionen-Anteil von 0,22 % gegenüber 4,36 % des Anfangs-Diluats; dies bedeutet einen Entsalzungsgrad von 95 %.

Die 2446 Teile dieser Endlösung können vorteilhaft zu einer Färbepräparation verarbeitet werden, indem man beispielsweise 20 Teile Natriumdihydrogenphosphat zusetzt und unter vermindertem Druck Wasser bis auf etwa 1524 Teile Lösung abdestilliert. Man erhält eine konzentrierte Farbstofflösung, die 27,5 % des Farbstoffes der Formel (C) enthält und einen pH-Wert von 4,5 aufweist. Diese flüssige Färbepräparation ist im geschlossenen Gefäß mindestens 3 Monate bei 20 °C, 2 Wochen bei 0 °C oder 6 Wochen bei 50 °C lagerstabil.

Mit 2 Teilen dieser pH-stabilisierten Lösung wurden jeweils Färbebäder, Klotzflotten und Druckpasten in bekannter und üblicher Weise hergestellt, die in der für Reaktivfarbstoffe üblichen Weise auf Baumwolle appliziert und fixiert, orange Färbungen und Drucke ergaben, die genauso farbstark waren wie diejenigen, die unter entsprechender Verwendung gleichkonzentrierter Färbebäder, Klotzflotten oder Druckpasten mit 1 Teil einer 55 % dieses Farbstoffes enthaltenden Pulvereinstellung hergetellt wurden.

Beispiel 4

3000 Teile einer wäßrigen Lösung, die 7,65 % des Farbstoffes der Formel (D)

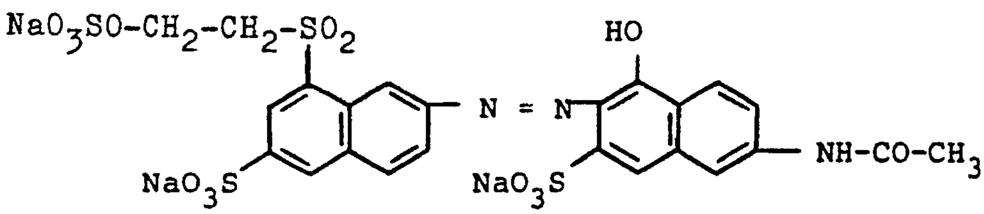

(D)

und 4,45 % an Chloridionen enthielt, wurde gemäß der Verfahrensweise des Beispieles 1 zwölf Stunden elektrodialysiert. Nach der Elektrodialyse betrug der Chloridionengehalt der Lösung nur noch 0,044 %, was einem Entsalzungsgrad von 99 % entspricht.

Die resultierende Farbstofflösung (2727 Teile) mit 8,4 % Farbstoffgehalt wurde mit 13 Teilen Natriumdihydrogenphosphat versetzt, und 1840 Teile Wasser wurden unten vermindertem Druck abdestilliert. Es wurden 900 Teile einer flüssigen Färbepräparation mit 25,5 % dieses Farbstoffes und einem pH-Wert von 4,6 erhalten.

Diese flüssige Färbepräparation war im geschlossenen Gefäß mindestens 3 Monate bei 20 °C, 2 Wochen bei 0 °C und 6 Wochen bei 50 °C lagerstabil. Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, orange Färbungen und Drucke ergaben, die genauso farbstark waren wie diejenigen, die unter entsprechender Verwendung gleichkonzentrierter Färbebäder, Klotzflotten oder Druckpasten mit 1 Teil einer 51 % des Farbstoffs (D) enthaltenden Pulvereinstellung hergestellt wurden.

Beispiel 5

500 Teile eines Farbstoffpulvers, das neben Alkalichlorid 62,5 % des Farbstoffes der Formel (E)

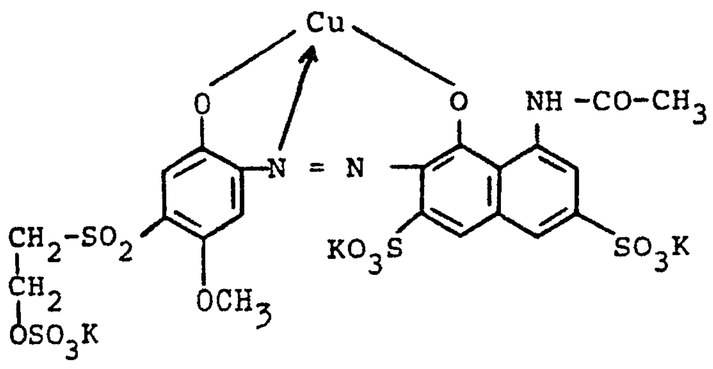

(E)

enthielt, wurden in 2500 Teile Wasser eingetragen und teilweise gelöst. Die resultierende Suspension wurde gemäß der Verfahrensweise des Beispieles 1 während 20 Stunden elektrodialysiert, wobei die zu Anfang auftretende Belegung der Membran mit ungelöstem Farbstoff durch kurzes Unterbrechen des Umpumpens des Diluats beseitigt wurde und gegen Ende der Elektrodialyse nicht mehr auftrat. Der zu Anfang bestehende Chloridionengehalt der Lösung (Suspension) von 3 % ging zum Ende der Elektrodialyse auf 0,08 % zurück, was einem Entsalzungsgrad von über 97 % entspricht. Es wurden 1980 Teile einer salzarmen Farbstofflösung mit einem Gehalt von 15,8 % des Farbstoffes der Formel (E) erhalten.

Eine vorteilhafte Färbepräparation läßt sich aus diesem Diluat herstellen, wenn man 25 Teile Natriumdihydrogenphosphat zugibt; die Präparation besitzt sodann einen pH-Wert von 4,8 und einen Farbstoffgehalt von 15,6 %. Diese flüssige Färbepräparation ist im geschlossenen Gefäß mindestens 3 Monate bei 20° C, 2 Wochen bei 0° C oder 6 Wochen bei 50° C lagerstabil.

Mit 3 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, rotstichig blaue Färbungen und Drucke ergaben, die genauso farbstark waren wie diejenigen, die unter entsprechender Verwendung gleichkonzentrierter Färbebäder, Klotzflotten oder Druckpasten mit 1 Teil einer 46,8 % des Farbstoffes (E) enthaltenden Pulvereinstellung hergestellt wurden.

Beispiel 6

3000 Teile einer wäßrigen Lösung, die 15,4 % des Farbstoffes der Formel (F)

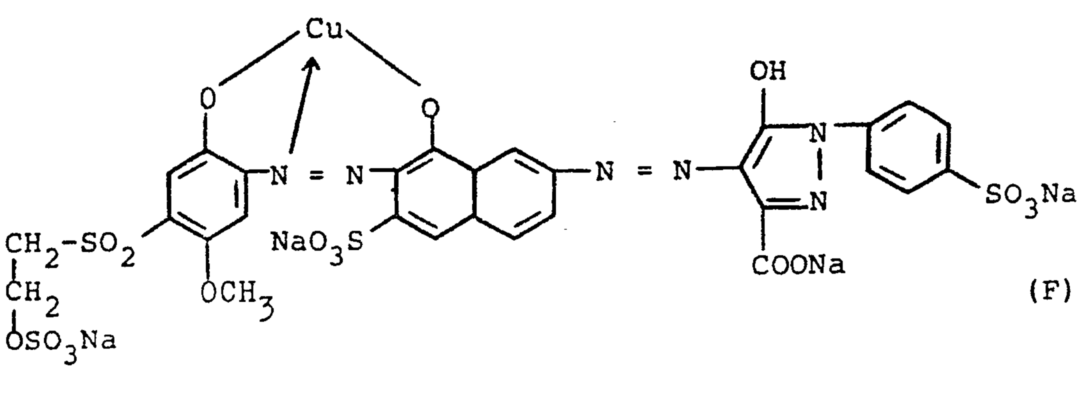

(F)

und 4,72 % Chloridionen enthielt, wurden gemäß der Verfahrensweise des Beispieles 1 während 18 Stunden elektrodialysiert. Es werden 2256 Teile eines Diluats erhalten, das 20,48 %ig an dem oben genannten Farbstoff und 0,049%ig an Chloridionen war. Der Entsalzungsgrad betrug demnach 99%.

Zur Herstellung eine vorteilhaften Flüssigpräparation kann das Diluat mit 30 Teilen Natriumdihydrogenphosphat versetzt werden, die einen pH-Wert von 4,8 und einen Farbstoffgehalt von etwa 20 % besitzt. Diese flüssige Färbepräparation ist im geschlossenen Gefäß mindestens 3 Monate bei 20° C, 2 Wochen bei 0° C oder 6 Wochen bei 50° C lagerstabil.

Mit 2 Teilen dieser pH-stabilisierten Lösung wurden jeweils Färbebäder, Klotzflotten und Druckpasten in

bekannter und üblicher Weise hergestellt, die, in der für Reaktivfarbstoffe üblichen Weise auf Baumwolle appliziert und fixiert, graue bzw. schwarze Färbungen und Drucke ergaben, die genauso farbstark waren wie diejenigen, die unter entsprechender Verwendung gleichkonzentrierter Färbebäder, Klotzflotten oder Druckpasten mit 1 Teil einer (ca.) 40 % des Farbstoffes (F) enthaltenden Pulvereinstellung hergestellt wurden.

Beispiel 7

3000 Teile einer wäßrigen Lösung, die 15,8 % des Farbstoffes de Formel (G)

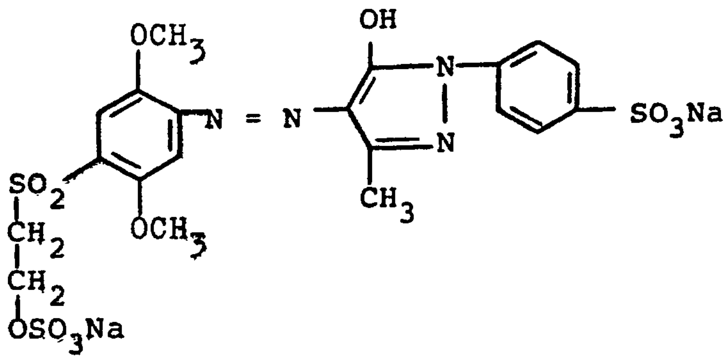

(G)

und 2,34 %ig an Chloridionen war, wurde gemäß der Verfahrensweise des Beispieles 1 18,5 Stunden elektrodialysiert. Es wurde eine Endlösung (2577 Teile) mit fast gleichem Farbstoffgehait und mit einem Chloridionengehalt von 0,009 % erhalten. Der Entsalzungsgrad betrug demnach über 99 %.

Eine vorteilhafte Färbepräparation kann aus diesem Diluat durch Zusatz von 30 Teilen Natriumdihydrogenphosphat und Abdestillation von 700 Teilen Wasser unter vermindertem Druck erhalten werden. Die Präparation besitzt sodann einen pH-Wert von 4,6 und einen Farbstoffgehalt von 25 % und ist im geschlossenen Gefäß mindestens 3 Monate bei 20°C, 2 Wochen bei 0°C oder 6 Wochen bei 50°C lagerstabil.

Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle applisiert und fixiert, goldgelbe Färbungen und Drucke ergaben, die genauso farbstark waren wie diejenigen, die unter entsprechender Verwendung gleichkonzentrierter Färbebäder, Klotzflotten oder Druckpasten mit 1 Teil einer 50 % dieses Farbstoffes (G) enthaltenden Pulvereinstellung hergestellt wurden.

Beispiel 8

3000 Teile einer wäßrigen Lösung, die 6,8 % des Farbstoffes der Formel (H)

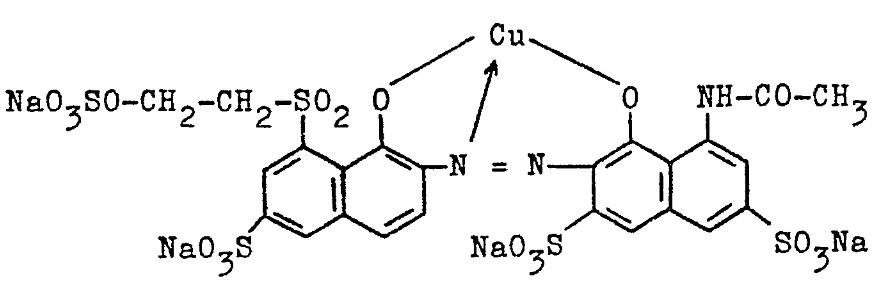

(H)

und 3,77 % Chloridionen enthielt, wurden gemäß der Verfahrensweise des Beispieles 1 während 14 Stunden elektrodialysiert. Es wurden 1942 Teile eines Diluats erhalten, das 10,5 % des Farbstoffes der Formel (H) und 0,19 % an Chloridionen enthielt. Der Entsalzungsgrad betrug demnach 96,7 %.

Eine vorteilhafte Färbepräparation kann durch Zusatz von beispielsweise 10 Teilen Natriumdihydrogenphosphat und Abdestillation von 927 Teilen Wasser unter vermindertem Druck erhalten werden. Die konzentrierte Farbstofflösung mit einem pH-Wert von 4,8 und einem Farbstoffgehalt von 22 % ist im geschlossenen Gefäß mindestens 3 Monate bei 20°C, 2 Wochen bei 0°C oder 6 Wochen bei 50°C lagerstabil. Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, blaue Färbungen und Drucke ergaben, die genauso farbstark waren wie diejenigen, die unter entsprechender Verwendung gleichkonzentrierter Färbebäder, Klotzflotten oder Druckpasten mit 1 Teil einer 44 % dieses Farbstoffes enthaltenden Pulvereinstellung hergestellt wurden.

Beispiel 9

2500 Teile einer wäßrigen Lösung, die 9,9 % eines Chromkomplex-und Kobaltkomplex-Farbstoffgemisches im molaren Verhältnis von etwa 2:1 gemäß der gemeinsamen Formel (J)

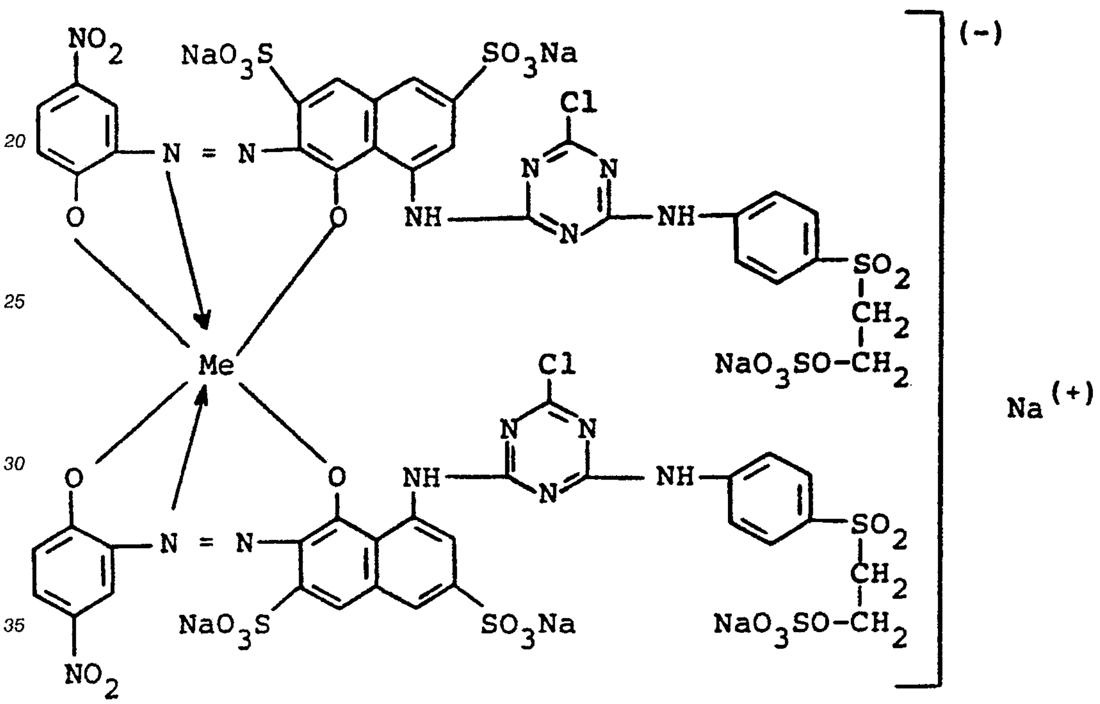

(J)

(wobei Me hier für Chrom und Kobalt im molaren Verhältnis von etwa 2:1 steht) und weiterhin 1,8 % Chloridionen enthielt, wurden gemäß der Verfahrensweise des Beispieles 1 während 13 Stunden elektrodialysiert. Es wurden 1650 Teile eines Diluats erhalten, das 15 % des Farbstoffgemisches der Formel (J) und 0,06 % an Chloridionen enthielt. Der Entsalzungsgrad betrug demnach 96,7 %.

Eine vorteilhafte Färbepräparation kann beispielsweise durch Zusatz von 15 Teilen Natriumdihydrogenphosphat und Abdestillation von 665 Teilen Wasser unter vermindertem Druck erhalten werden. Die konzentrierte Farbstofflösung mit einem pH-Wert von 4,7 und einem Farbstoffgehalt von 24,75 % ist im geschlossenen Gefäß mindestens 3 Monate bei 20°C, 2 Wochen bei 0°C oder 6 Wochen bei 50°C lagerstabil.

Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, schwarze Färbungen und Drucke ergaben, die genauso farbstark waren wie diejenigen, die unter entsprechender Verwendung gleichkonzentrierter Färbebäder, Klotzflotten oder Druckpasten mit 1 Teil einer 49,5 % dieses Farbstoffgemisches enthaltenden Pulvereinstellung hergestellt wurden.

Beispiel 10

3000 Teile einer wäßrigen Lösung, die 13 % des Farbstoffes der Formel (K)

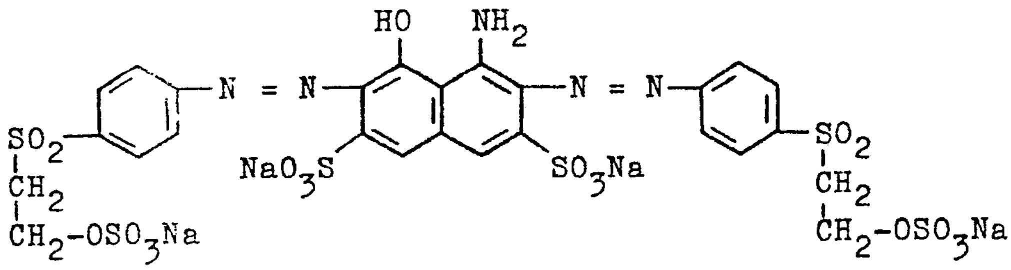

(K)

und 4,1 % Chloridionen enthielt, wurden gemäß der Verfahrensweise des Beispieles 1 während 18 Stunden elektrodialysiert. Es wurden 2167 Teile eines Diluats erhalten, das 18 % des Farbstoffes der Formel (K) und 0,11 % an Chloridionen enthielt. Der Entsalzungsgrad betrug demnach 97,3 %.

Eine vorteilhafte Färbepräparation kann durch Zusatz von beispielsweise 25 Teilen Natriumdihydrogenphosphat und Abdestillation von 458 Teilen Wasser unter vermindertem Druck erhalten werden. Die konzentrierte Farbstofflösung mit einem pH-Wert von 4,8 und einem Farbstoffgehalt von 22,5 % ist im geschlossenen Gefäß mindestens 3 Monate bei 20 °C, 2 Wochen bei 0 °C oder 6 Wochen bei 50 °C lagerstabil.

Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, schwarze Färbungen und Drucke ergaben, die genauso farbstark waren wie diejenigen, die unter entsprechender Verwendung gleichkonzentrierter Färbebäder, Klotzflotten oder Druckpasten mit 1 Teil einer 45 % dieses Farbstoffes enthaltenden Pulvereinstellung hergestellt wurden.

Beispiel 11

3000 Teile einer wäßrigen Lösung, die 17 % des Farbstoffes der Formel (L)

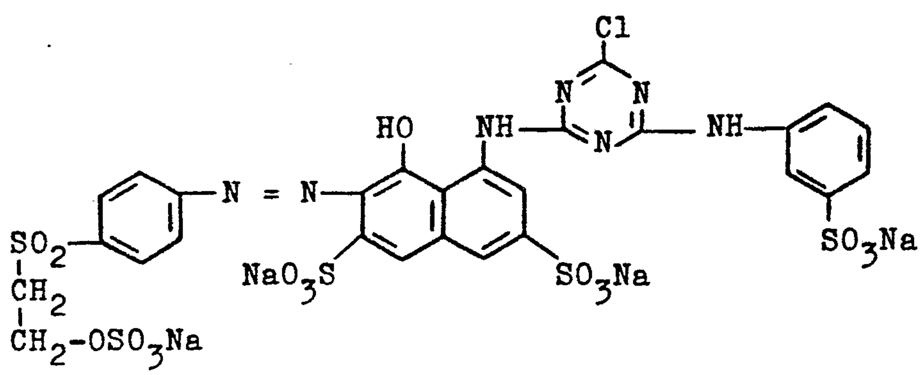

(L)

und 5,1 % Chloridionen enthielt, wurden gemäß der Verfahrensweise des Beispieles 1 während 17 Stunden elektrodialysiert. Es wurden 2452 Teile eines Diluats erhalten, das 20,8 % des Farbstoffes der Formel (L) und 0,09 % an Chloridionen enthielt. Der Entsalzungsgrad betrug demnach 98,2 %.

Eine vorteilhate Färbepräparation kann durch Zusatz von beispielsweise 30 Teilen Natriumdihydrogenphosphat und Abdestillation von 413 Teilen Wasser unter vermindertem Druck erhalten werden. Die konzentrierte Farbstofflösung mit einem pH-Wert von 4,5 und einem Farbstoffgehalt von 24,6 % ist im geschlossenen Gefäß mindestens 3 Monate bei 20 °C, 2 Wochen bei 0 °C oder 6 Wochen bei 50 °C lagerstabil.

Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, rote Färbungen und Drucke ergaben, die genauso farbstark waren wie diejenigen, die unter entsprechender Verwendung gleichkonzentrierter Färbebäder, Klotzflotten oder Druckpasten mit 1 Teil einer 49,3 % dieses Farbstoffes enthaltenden Pulvereinstellung hergestellt wurden.

Beispiel 12

3000 Teile einer wäßrigen Suspension, die 18,5 % des Farbstoffes der Formel (M)

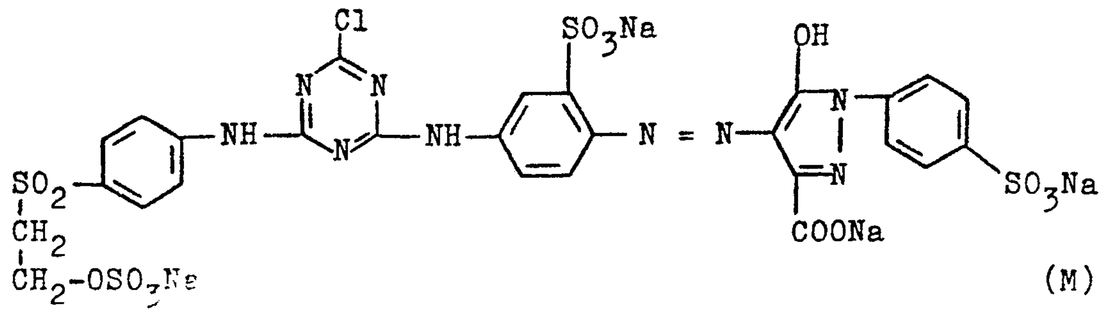

(M)

und 4,5 % Chloridionen enthielt, wurden gemäß der Verfahrensweise des Beispieles 5 während 20 Stunden bei einer Temperatur von 40° C elektrodialysiert. Es wurden 2523 Teile eines Diluats in Form einer Lösung erhalten, das 22 % des Farbstoffes der Formel (M) und 0,16 % an Chloridionen enthielt. Der Entsalzungsgrad betrug demnach 96,8 %.

Eine vorteilhafte Färbepräparation kann durch Zusatz von beispielsweise 33 Teilen Natriumdihydrogenphosphat und Abdestillation von 336 Teilen Wasser unter vermindertem Druck erhalten werden. Die konzentrierte Farbstofflösung mit einem pH-Wert von 4,7 und einem Farbstoffgehalt von 25 % ist im geschlossenen Gefäß mindestens 3 Monate bei 20° C, 2 Wochen bei 0° C oder 6 Wochen bei 50° C lagerstabil.

Mit 2 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, goldgelbe Färbungen und Drucke ergaben, die genauso farbstark waren wie diejenigen, die unter entsprechender Verwendung gleichkonzentrierter Färbebäder, Klotzflotten oder Druckpasten mit 1 Teil einer 50 % dieses Farbstoffes enthaltenden Pulvereinstellung hergestellt wurden.

Beispiel 13

2800 Teile einer wäßrigen Lösung, die 9,43 % des Farbstoffes der Formel (N)

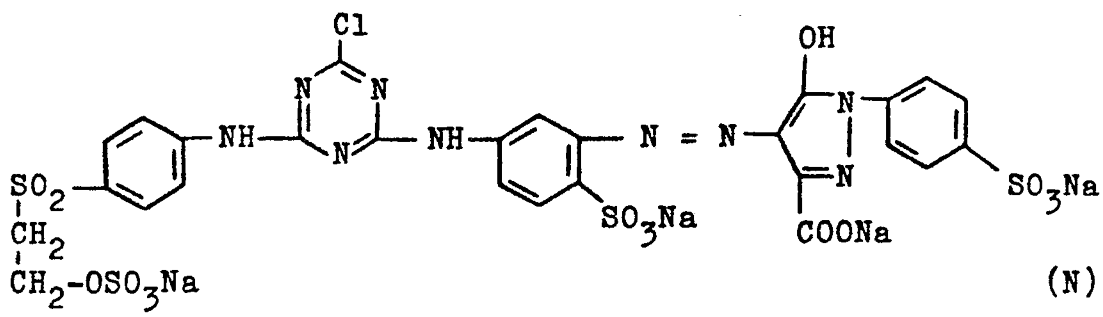

(N)

und 3,8 % Chloridionen enthielt, wurden gemäß der Verfahrensweise des Beispieles 1 während 14 Stunden elektrodialysiert. Es wurden 1760 Teile eines Diluats erhalten, das 15 % des Farbstoffes der Formel (N) und 0,04 % an Chloridionen enthielt. Der Entsalzungsgrad betrug demnach 98,9 %.

Eine vorteilhafte Färbepräparation kann durch Zusatz von beispielsweise 20 Teilen Natriumdihydrogenphosphat und Abdestillation von 440 Teilen Wasser unter vermindertem Druck erhalten werden. Die konzentrierte Farbstofflösung mit einem pH-Wert von 4,8 und einem Farbstoffgehalt von 19,7 % ist im geschlossenen Gefäß mindestens 3 Monate bei 20° C, 2 Wochen bei 0° C oder 6 Wochen bei 50° C lagerstabil.

Mit 3 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, gelbe Färbungen und Drucke ergaben, die genauso farbstark waren wie diejenigen, die unter entsprechender Verwendung gleichkonzentrierter Färbebäder, Klotzflotten oder Druckpasten mit 1 Teil einer 59,1 % dieses Farbstoffes enthaltenden Pulvereinstellung hergestellt wurden.

Beispiel 14

3000 Teile einer wäßrigen Lösung, die 8 % des Farbstoffes der Formel (P)

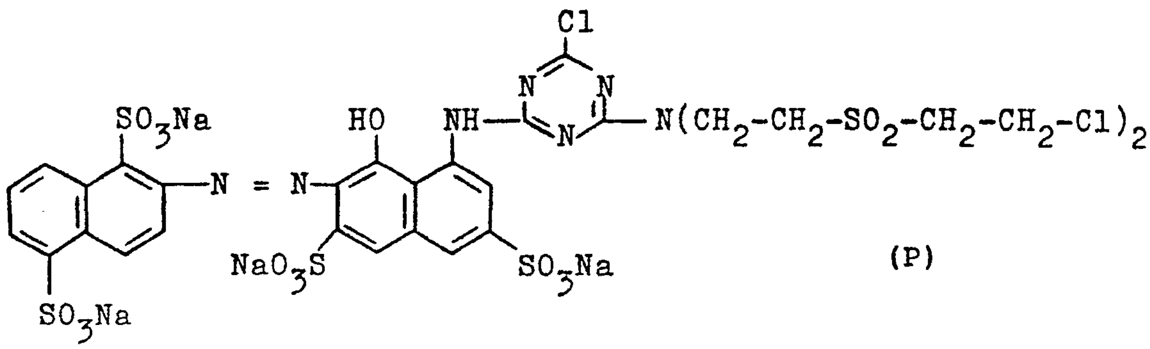

(P)

und 3,5 % Chloridionen enthielt, wurden gemäß der Verfahrensweise des Beispieles 1 während 17 Stunden elektrodialysiert. Es wurden 2181 Teile eines Diluats erhalten, das 11 % des Farbstoffes der Formel (P) und 0,06 % an Chloridionen enthielt. Der Entsalzungsgrad betrug demnach 98,3 %.

Eine vorteilhafte Färbepräparation kann durch Zusatz von beispielsweise 20 Teilen Natriumdihydrogenphosphat und Abdestillation von 837 Teilen Wasser unter vermindertem Druck erhalten werden. Die konzentrierte Farbstofflösung mit einem pH-Wert von 4,8 und einem Farbstoffgehalt von 17,6 % ist im geschlossenen Gefäß mindestens 3 Monate bei 20 °C, 2 Wochen bei 0 °C oder 6 Wochen bei 50 °C lagerstabil.

Mit 3 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, rote Färbungen und Drucke ergaben, die genauso farbstark waren wie diejenigen, die unter entsprechender Verwendung gleichkonzentrierter Färbebäder, Klotzflotten oder Druckpasten mit 1 Teil einer 52,8 % dieses Farbstoffes enthaltenden Pulvereinstellung hergestellt wurden.

Beispiel 15

2705 Teile einer wäßrigen Lösung, die 11 % des Farbstoffes der Formel (Q)

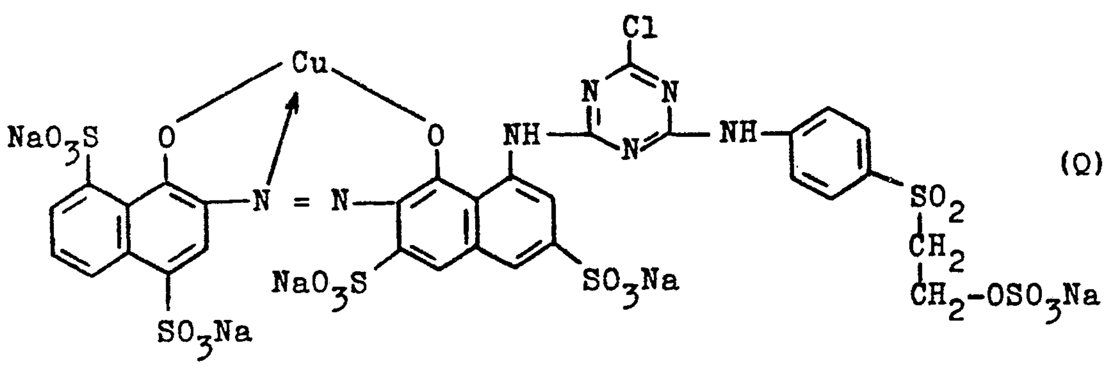

(Q)

und 3,2 % Chloridionen enthielt, wurden gemäß der Verfahrensweise des Beispieles 1 während 18 Stunden elektrodialysiert. Es wurden 1983 Teile eines Diluats erhalten, das 11 % des Farbstoffes der Formel (Q) und 0,16 % an Chloridionen enthielt. Der Entsalzungsgrad betrug demnach 95 %.

Eine vorteilhafte Färbepräparation kann durch Zusatz von beispielsweise 20 Teilen Natriumdihydrogenphosphat und Abdestillation von 500 Teilen Wasser unter vermindertem Druck erhalten werden. Die konzentrierte Farbstofflösung mit einem pH-Wert von 4,6 und einem Farbstoffgehalt von 19,8 % ist im geschlossenen Gefäß mindestens 3 Monate bei 20°C, 2 Wochen bei 0°C oder 6 Wochen bei 50°C lagerstabil.

Mit 3 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, rote Färbungen und Drucke ergaben, die genauso farbstark waren wie diejenigen, die unter entsprechender Verwendung gleichkonzentrierter Färbebäder, Klotzflotten oder Druckpasten mit 1 Teil einer 59,4 % dieses Farbstoffes enthaltenden Pulvereinstellung hergestellt wurden.

## Ansprüche

1. Verfahren zur Herstellung von salzarmen wäßrigen Lösungen eines oder mehrerer faserreaktiver Farbstoffe der der allgemeinen Formel (1)

$$(MO_3S)_m - F - Z_n \qquad (1)$$

in welcher

F den Rest eines Farbstoffchromophors eines Anthrachinon-, eines Formazan-, eines Dioxazin-, eines Mono-, Dis- oder Trisazofarbstoffes oder eines Phthalocyaninfarbstoffes darstellt, wobei sowohl die Phthalocyaninfarbstoffe als auch die Formazan-, Dioxazin- oder Azofarbstoffe als Metallkomplexe mit Cu, Cr, Co, Ni oder Fe als komplexbildendes Zentrala-atom vorliegen können,

m eine ganze Zahl von 1 bis 8 ist,

n eine ganze Zahl von 1 bis 3 bedeutet,

Z für eine faserreaktive Gruppe der Monohalogen-symm.-triazinyl-,Mono-, Di- oder Trihalogenpyrimidin-, Mono- oder Dichlorchinoxalin- oder Dichlorphthalazin-, Dichlorchinazolin- oder Dichlorpyridazon-Reihe oder deren Brom- oder Fluorderivate, der sulfonylgruppenhaltigen Triazinyl-, der sulfonylgruppenhaltigen Pyrimidin oder ammoniumgruppenhaltigen Triazinyl-Reihe oder der Pyrimidin- oder ammoniumgruppenhaltigen Triazinyl-Reihe oder der aliphatischen Reihe steht, und

M ein Wasserstoffatom, ein Alkalimetall oder das Äquivalent eines Erdalkalimetalls bedeutet, durch Entfernung von Alkali- oder Erdalkalihalogeniden, dadurch gekennzeichnet, daß man die halogenidhaltige wäßrige Lösung des (der) faserreaktiven Farbstoffe(s) zwischen zwei Elektroden und Anionen- und Kationentauschermembranen einer Gleichspannung aussetzt und elektrodialysiert.

2. Verfahren nach Anspruch 1, dadurch gekennzeichnet, daß anionen- und kationenselektive Ionentauschermembranen verwendet werden, die eine Permselektivität von größer als 0,9 und einen elektrischen Widerstand von kleiner als 5 $\Omega/cm^2$ besitzen.

3. Verfahren nach Anspruch 2, dadurch gekennzeichnet, daß die Ionentauschermembranen eine Porengröße von bis zu 2 nm aufweisen.

4. Verfahren nach Anspruch 1, 2 oder 3, dadurch gekennzeichnet, daß man eine Farbstofflösung von Farbstoffen der allgemeinen Formel (1) einsetzt, in welcher Z die Vinylsulfonyl-, ß-Chlorethylsulfonyl-, ß-Acetoxyethylsulfonyl-, ß-(3-Sulfobenzoyloxy)-ethylsulfonyl-, ß-Sulfatoethylsulfonyl-, ß-Thiosulfatoethylsulfonyl-, ß-Phosphatoethylsulfonyl-, ß-Sulfatoethylsulfonyl-methylamino oder

Vinylsulfonyl-methylamino-Gruppe ist.

5. Verfahren nach Anspruch 1, 2 oder 3, dadurch gekennzeichnet, daß man eine Farbstofflösung eines Farbstoffs der Formel

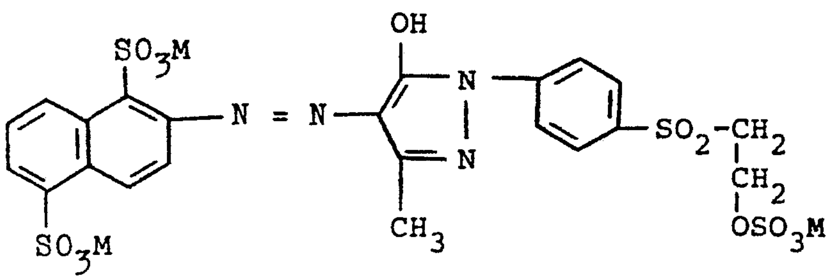

in welcher M ein Alkalimetal ist, einsetzt.

6. Verfahren nach Anspruch 1, 2 oder 3, dadurch gekennzeichnet, daß man eine Farbstofflösung eines Farbstoffs der Formel

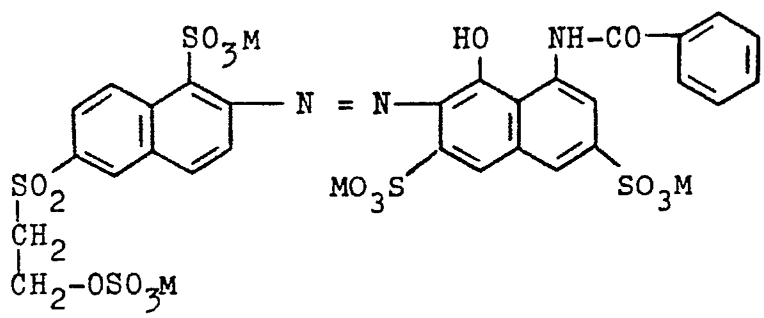

in welcher M ein Alkalimetall ist, einsetzt.

7. Verfahren nach Anspruch 1, 2 oder 3, dadurch gekennzeichnet, daß man eine Farbstofflösung eines Farbstoffs der Formel

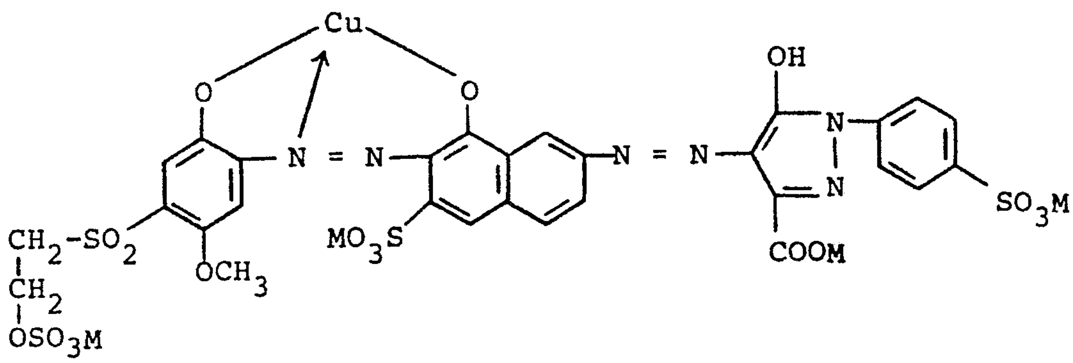

in welcher M ein Alkalimetall ist, einsetzt.

8. Verfahren nach Anspruch 1, 2 oder 3, dadurch gekennzeichnet, daß man eine Farbstofflösung eines Farbstoffgemisches entsprechend der allgemeinen Formel

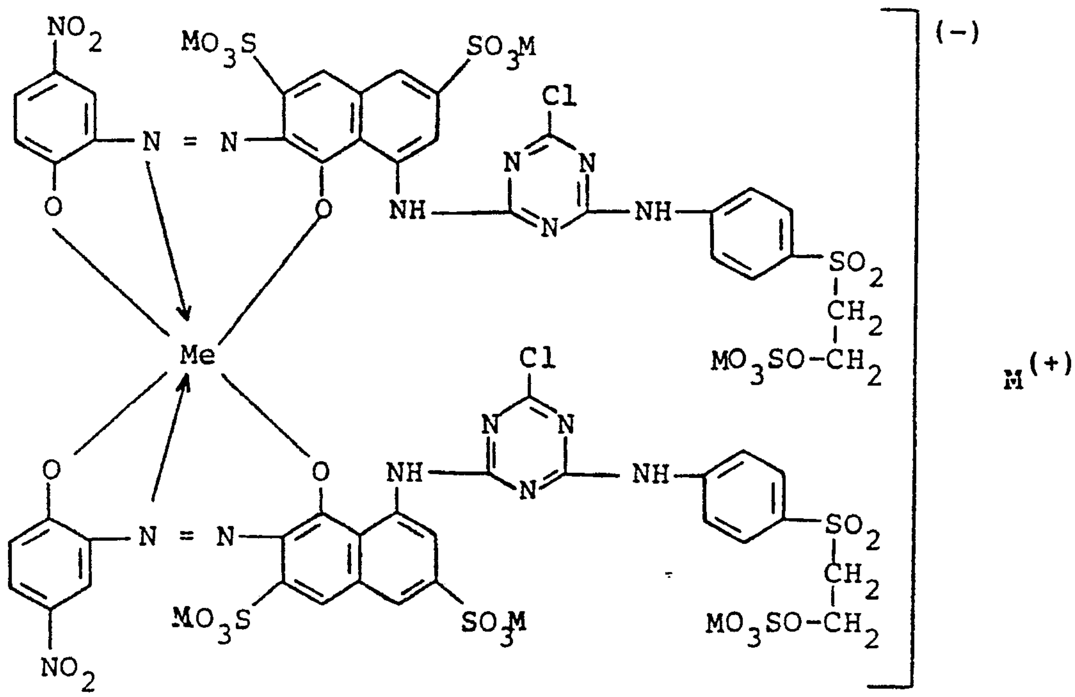

in welcher Me für Chrom und Kobalt im molaren Verhältnis von etwa 2:1 und M für ein Alkalimetall steht, einsetzt.

**9.** Verfahren nach Anspruch 1, 2 oder 3, dadurch gekennzeichnet, daß man eine Farbstofflösung eines Farbstoffs der Formel

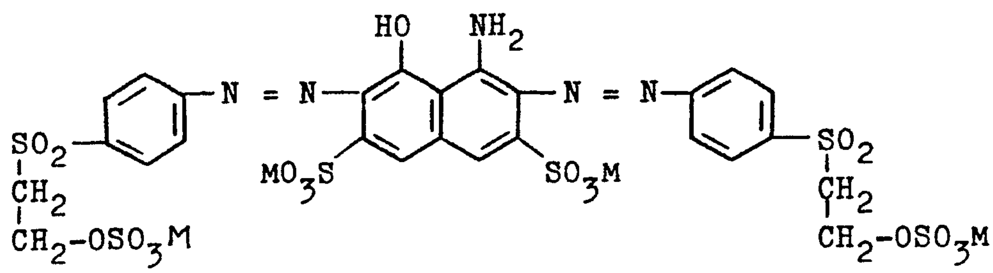

in welcher M ein Alkalimetall ist, einsetzt.

**10.** Verfahren nach Anspruch 1, 2 oder 3, dadurch gekennzeichnet, daß man eine Farbstofflösung eines Farbstoffs der Formel

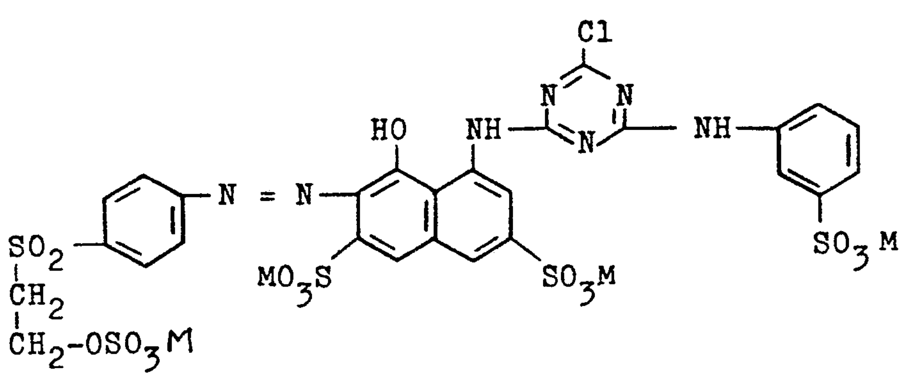

in welcher M ein Alkalimetall ist, einsetzt.

## Claims

1. A process for preparing low-salt aqueous solutions of one or more fiber-reactive dyestuffs of the formula (1)

$$(MO_3S)_m - F - Z_n \qquad (1)$$

in which

F represents the radical of a dyestuff chromophore of an anthraquinone, formazan, dioxazine, monoazo, disazo or trisazo dyestuff or of a phthalocyanine dyestuff, it being possible not only for the phthalocyanine dyestuffs but also for the formazan, dioxazine or azo-dyestuffs to be present as metal complexes with copper, chromium, cobalt, nickel or iron as complexing central atom,

m is a whole number from 1 to 8,

n denotes a whole number from 1 to 3,

Z stands for a fiber-reactive group of the monohalogeno-symmetrical-triazinyl, monohalogenopyrimidine, dihalogenopyrimidine or trihalogenopyrimidine, monochloroquinoxaline, dichloroquinoxaline, dichlorophthalazine, dichloroquinazoline or dichloropyridazone series or their bromine or fluorine derivatives; of the sulfonyl-containing triazinyl, the sulfonyl-containing pyrimidine or ammonium-containing triazinyl series; or of the pyrimidine or ammonium-containing triazinyl series; or of the aliphatic series, and

M denotes a hydrogen atom, an alkali metal or one equivalent of an alkaline earth metal,

by removal of alkali or alkaline earth metal halides, which comprises exposing the halide-containing aqueous solution of the fiber-reactive dyestuff(s) to a direct voltage between two electrodes and anion and cation exchanger membranes in an electrodialysis.

2. The process as claimed in claim 1, wherein the anion- and cation-selective ion exchanger membranes used have a permselectivity of greater than 0.9 and an electric resistance of less than 5 $\Omega/cm^2$.

3. The process as claimed in claim 2, wherein the ion exchanger membranes have a pore size of up to 2 nm.

4. The process as claimed in claim 1, 2 or 3, wherein the dyestuff solution used is of dyestuffs of the formula (1) in which Z is a vinylsulfonyl, ß-chloroethylsulfonyl, ß-acetoxyethylsulfonyl, ß-(3-sulfobenzoyloxy)-ethylsulfonyl, ß-sulfatoethylsulfonyl, ß-thiosulfatoethylsulfonyl, ß-phosphatoethylsulfonyl, ß-sulfatoethylsulfonylmethylamino or vinylsulfonylmethylamino group.

5. The process as claimed in claim 1, 2 or 3, wherein the dyestuff solution used is of a dyestuff of the formula

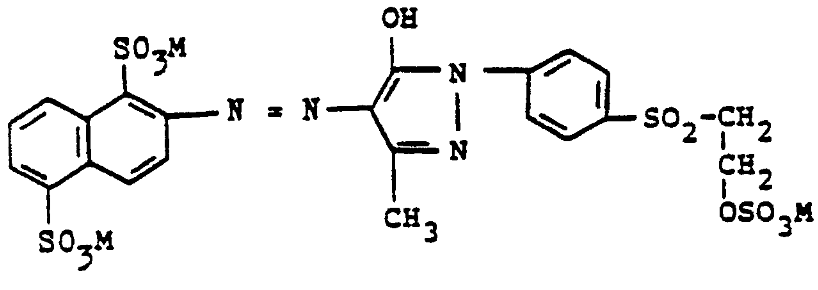

in which M is an alkali metal.

6. The process as claimed in claim 1, 2 or 3, wherein the dyestuff solution used is of a dyestuff of the formula

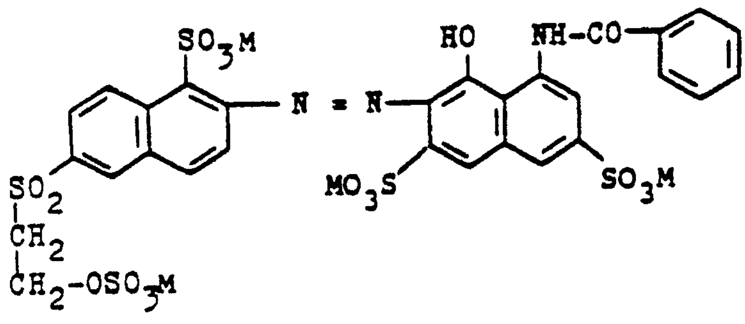

in which M is an alkali metal.

7. The process as claimed in claim 1, 2 or 3, wherein the dyestuff solution used is of a dyestuff of the formula

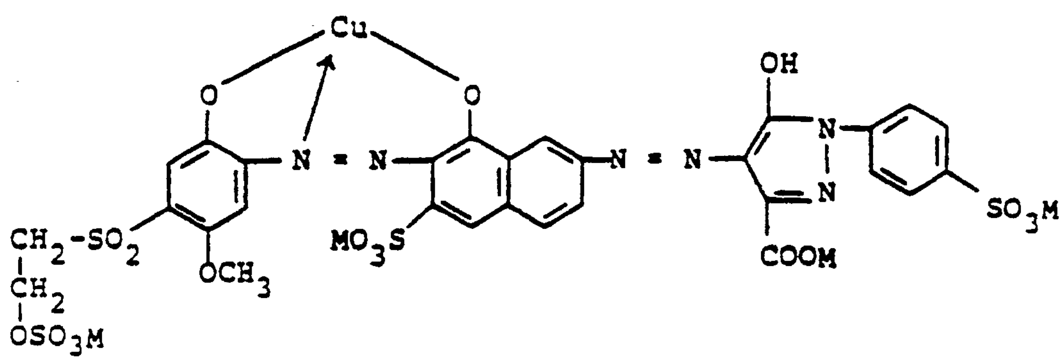

in which M is an alkali metal.

8. The process as claimed in claim 1, 2 or 3, wherein the dyestuff solution used is of a dyestuff mixture of the formula

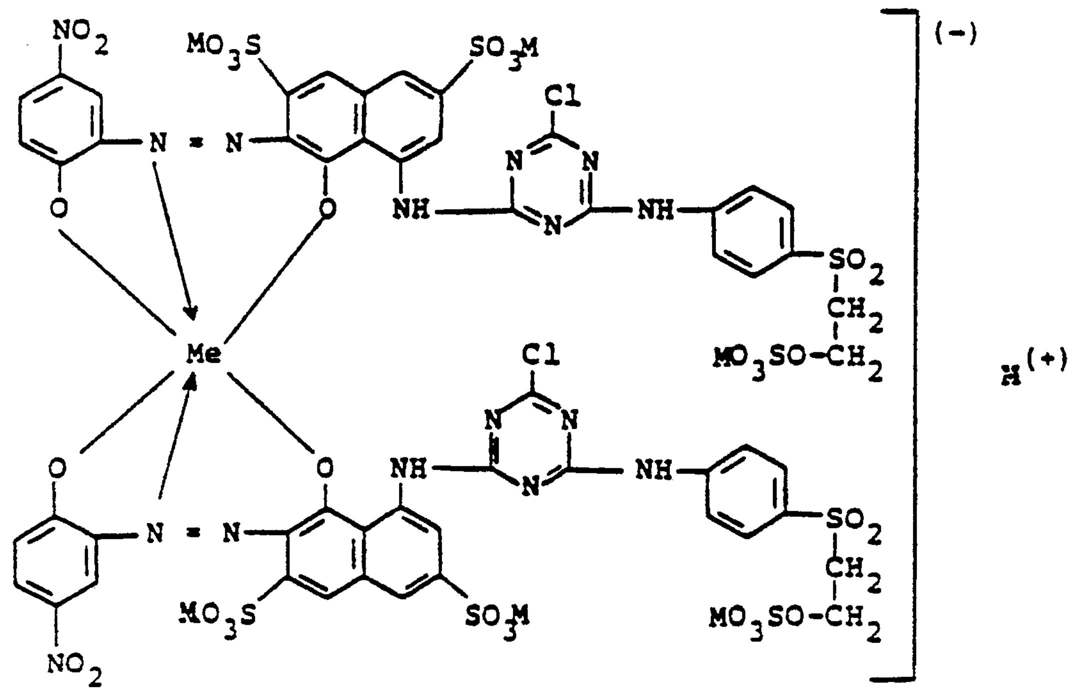

in which Me stands for chromium and cobalt in a molar ratio of about 2:1 and M stands for an alkali metal.

9. The process as claimed in claim 1, 2 or 3, wherein the dyestuff solution used is of a dyestuff of the formula

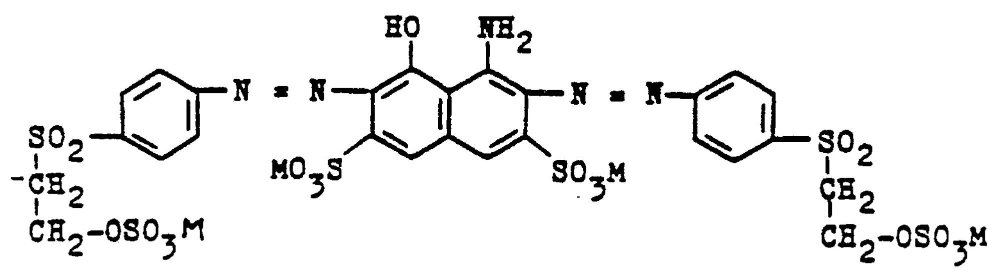

in which M is an alkali metal.

10. The process as claimed in claim 1, 2 or 3, wherein the dyestuff solution used is of a dyestuff of the formula

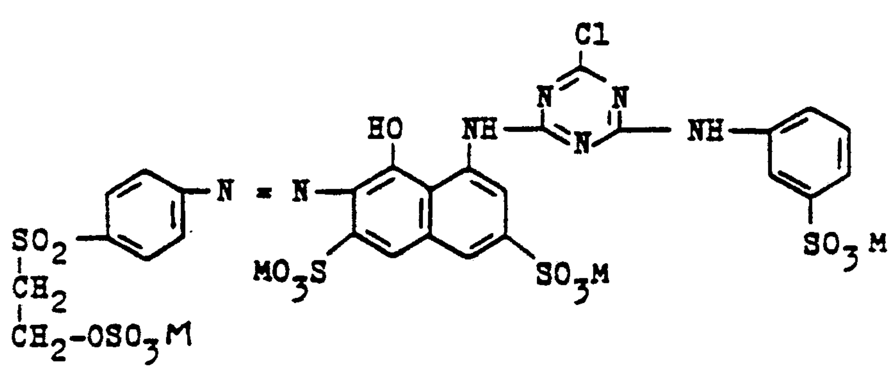

in which M is an alkali metal.

## Revendications

1. Procédé pour préparer des solutions aqueuses, pauvres en sels, d'un ou plusieurs colorants réactifs à l'égard des fibres et répondant à la formule générale (1) :

$$(MO_3S)_m - F - Z_n \qquad (1)$$

(dans laquelle :

F représente le reste d'un chromophore d'un colorant de la série de l'anthraquinone, du formazane, d'une dioxazine, d'un colorant monoazoïque, disazoïque ou trisazoïque ou d'un colorant de la série des phtalocyanines, le colorant de la série des phtalocyanines aussi bien que les colorants du formazane, du type dioxazine ou des colorants azoïques pouvant être présents sous forme de complexes avec les métaux Cu, Cr, Co, Ni ou Fe comme atome central formateur de complexes,

m est un nombre entier valant 1 à 8,

n est un nombre entier valant 1 à 3,

Z représente un groupe pouvant réagir avec les fibres, de la série monohalogénotriazinyle symétrique, mono-, di- ou tri-halogénopyrimidine, mono- ou di-chloroquinoxaline, ou dichlorophtalazine, dichloroquinazoline ou dichloropyridazone, ou leurs dérivés bromés ou fluorés, de triazinyles contenant des groupes sulfonyles, de pyrimidines contenant des groupes sulfonyles ou de la série triazinyle contenant des groupes ammoniums ou de la série pyrimidine ou triazinyle contenant des groupes ammoniums ou de la série aliphatique, et

M représente un atome d'hydrogène, un métal alcalin ou l'équivalent d'un métal alcalino-terreux), par élimination d'halogénures alcalins ou alcalino-terreux, procédé caractérisé en ce qu'on soumet la solution aqueuse, contenant de l'halogénure, du ou des colorants capables de réagir avec les fibres, entre deux électrodes et des membranes échangeuses d'anions et de cations, à l'action d'une tension continue et l'on effectue une électrodialyse de la solution,

2. Procédé selon la revendication 1, caractériséen ce qu'on utilise des membranes échangeuses d'ions, sélectifs pour des anions et des cations, qui ont une sélectivité de perméation supérieure à 0,9 et une résistance électrique inférieure à 5 ohms/cm$^2$.

3. Procédé selon la revendication 2, caractérisé en ce que les membranes d'échange d'ions présentent une grosseur des pores allant jusqu'à 2 nm.

4. Procédé selon la revendication 1, 2 ou 3, caractérisé en ce qu'on utilise une solution de colorants de formule générale (1), dans laquelle Z représente le groupe vinylsulfonyle, chloro-2 éthylsulfonyle, acétoxy-2 éthylsulfonyle, (sulfo-3 benzoyloxy)-2 éthylsulfonyle, sulfato-2 éthylsulfonyle, thiosulfato-2 éthylsulfonyle, phosphato-2 éthylsulfonyle, sulfato-2 éthylsulfonyl-méthylamino ou vinylsulfonyl-méthylamino.

5. Procédé selon la revendication 1, 2 ou 3, caractérisé en ce qu'on utilise une solution d'un colorant de formule :

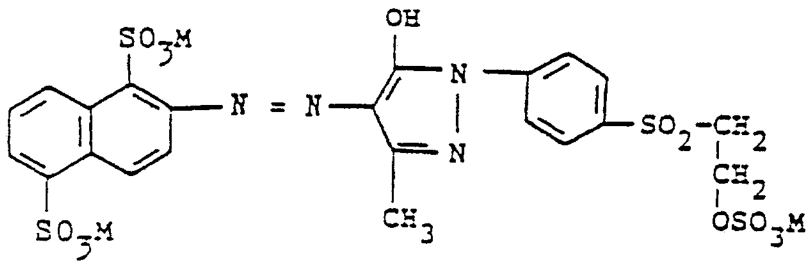

dans laquelle M représente un métal alcalin.

6. Procédé selon la revendication 1, 2 ou 3, caractérisé en ce qu'on utilise une solution d'un colorant de formule :

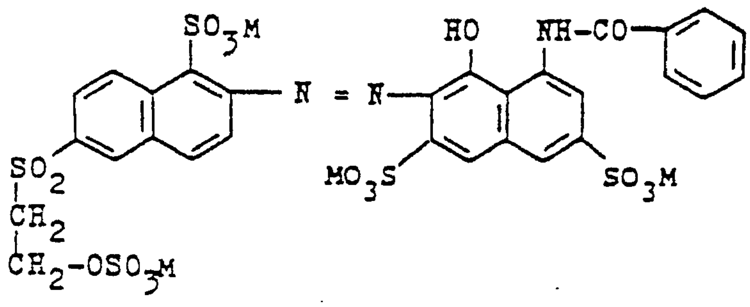

dans laquelle M représente un métal alcalin.

7. Procédé selon la revendication 1, 2 ou 3, caractérisé en ce qu'on utilise une solution d'un colorant de formule :

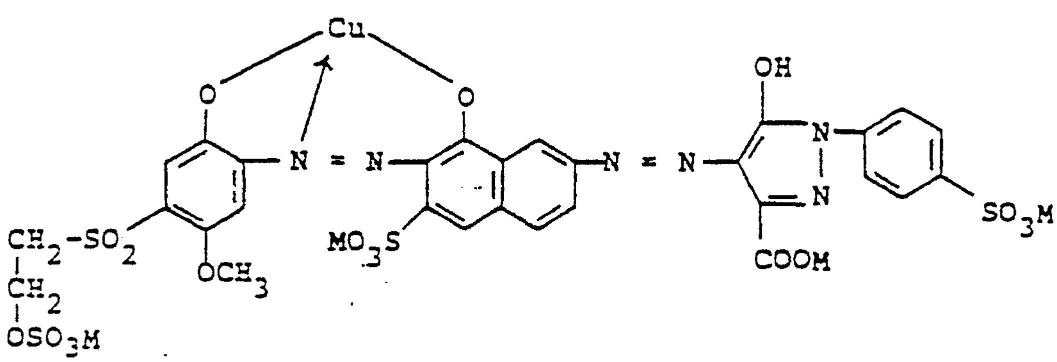

dans laquelle M représente un métal alcalin.

8. Procédé selon la revendication 1, 2 ou 3, caractérisé en ce qu'on utilise une solution d'un mélange de colorants répondant à la formule générale :

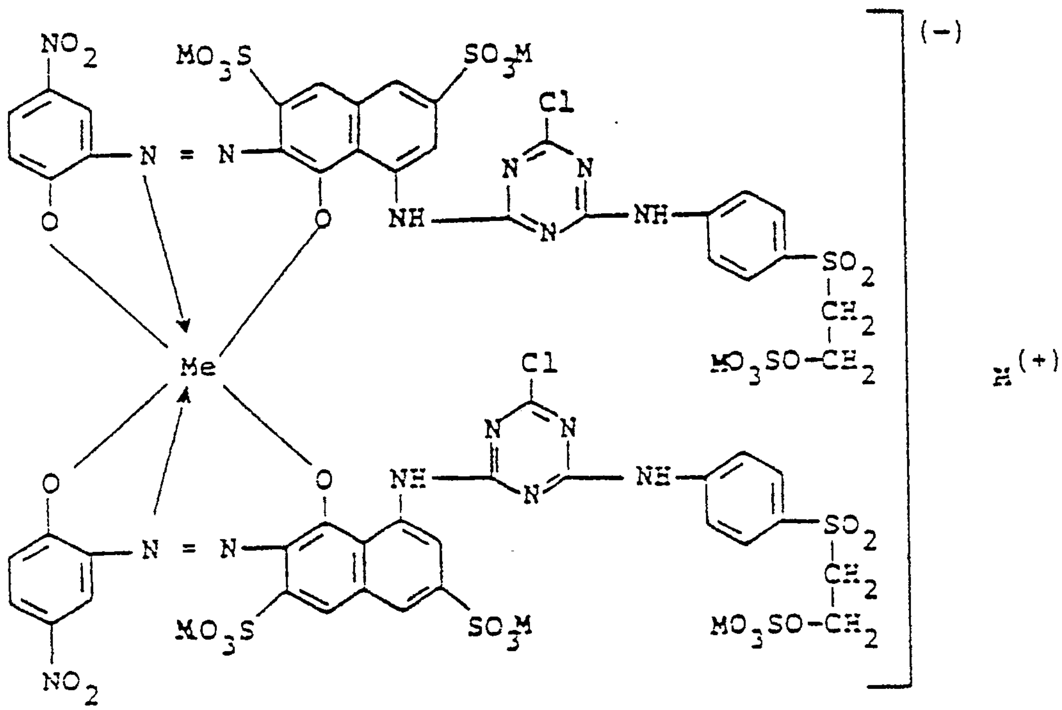

dans laquelle Me représente le chrome et le cobalt, selon un rapport molaire d'environ 2:1, et M représente un métal alcalin.

9. Procédé selon la revendication 1, 2 ou 3, caractérisé en ce qu'on utilise une solution d'un colorant de formule :

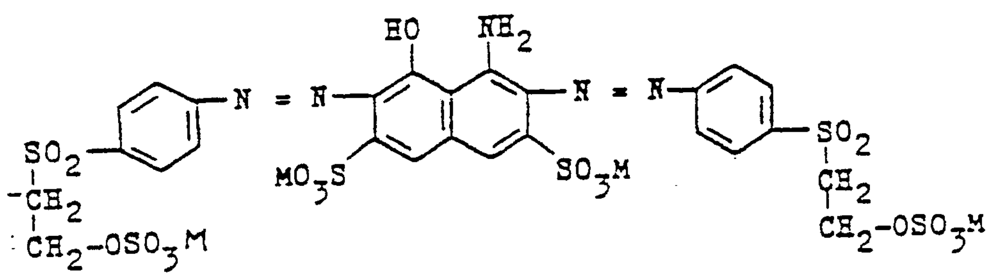

dans laquelle M est un métal alcalin.

10. Procédé selon la revendication 1, 2 ou 3, caractérisé en ce qu'on utilise une solution d'un colorant de formule :

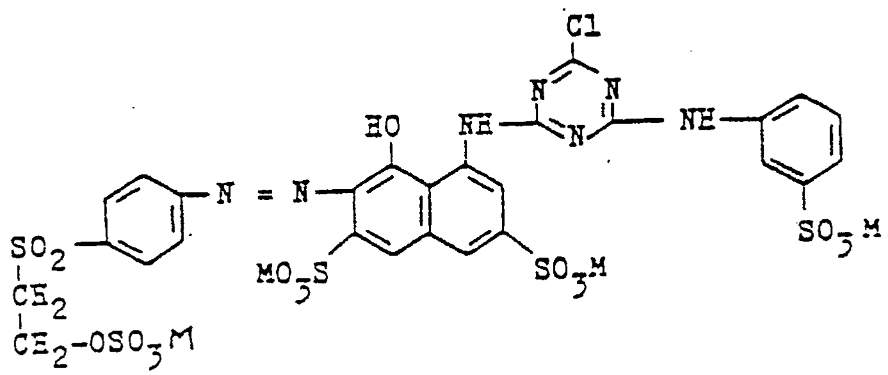

dans laquelle M est un métal alcalin.